# EUROPEAN PATENT SPECIFICATION

(11) **EP 2 454 927 B1**
(45) Date of publication and mention of the grant of the patent: **29.07.2015**
(21) Application number: 11189333.5
(22) Date of filing: 16.11.2011
(51) Int. Cl.: A01B 69/00, A01D 34/00, A01D 34/835, A47B 88/04, E04D 11/00, A47B 88/00

(54) **Mowing apparatus and grass maintenance system**
Mähvorrichtung und Graspflegesystem
Tondeuse et appareil d'entretien du gazon

(30) Priority: 17.11.2010 US 414717 P
(43) Date of publication of application: 23.05.2012
(73) Proprietor: Sa, Shuang, Richmond, BC V6V 1W5 (CA)
(72) Inventor: Sa, Shuang, Richmond, BC V6V 1W5 (CA)
(74) Representative: Appleyard Lees

(56) References cited:
- WO-A1-2005/002320
- WO-A1-2009/062638
- JP-A- 2000 139 153
- US-A- 1 629 984
- US-A- 1 754 336
- US-A- 2 786 320
- US-A- 5 392 593
- US-A- 5 421 653

## Description

### CROSS-REFERENCE TO RELATED APPLICATION

This patent application claims priority from U.S. Provisional Patent Application No. 61/414,717 filed November 17,2010.

### FIELD OF THE INVENTION

The invention relates generally to a mowing apparatus including a mowing device supported on and retained by one or more support tracks during a normal mowing operation. In particular, the invention relates to an automated mowing apparatus for an automated mowing operation. The invention also relates a grass maintenance system.

### BACKGROUND OF THE INVENTION

Green roofs have become a growing trend of environmentalism. For example, green roofs can include a layer of vegetation covering building rooftops to provide insulation to the building, absorb rainwater, and create natural habitat. Some cities have approved by-laws or regulations mandating green roofs on residential and industrial buildings.

US-A-5392593 (to Emery Tree Service, Inc.) discloses a mobile vegetation cutting apparatus that has a mobile chassis adapted for travel on a railroad trackway, at least two boom assemblies pivotally attached to the mobile chassis, and cutting means attached to each boom assembly.

WO-A-2005/002320 (to Lars Hedstrom-Lang) discloses a lawn mower which is characterized in that it comprises rails which are arranged on two opposite lateral edges of the lawn, a main carrier which is arranged between the rails and which can be displaced along said rails, a mowing container which can travel along the main carrier, and at least one lawn mower arranged in a detachable manner on the mowing container.

US-A-5421653 (to Southern Tool Manufacturing Co.) discloses a slide system for movably connecting adjacent articles having support channels and cooperating flanges affixed to first and second articles movable in a parallel relationship with respect to each other, and with an internal sleeve located within the support channel to cooperatively receive an engaging portion of the flange, whereby the flange-engaging portion slideably moves within the internal sleeve to support and maintain the adjacent articles in substantially the same relationship with each other as they are moved with respect to each other.

One problem in maintaining green roofs is mowing the grass on the building roofs. For example, when green roofs are applied to residential houses, the grass on the house roofs is not easily accessible. Consequently, mowing the grass on the house roofs or maintaining the green roofs can be a challenge, especially to the house owners.

The embodiments below describe a mowing apparatus that addresses the above-mentioned problems. More specifically, the mowing apparatus described below allows for automated grass mowing operation.

### SUMMARY OF THE INVENTION

The embodiments described herein provide a mowing apparatus including a mowing device supported on and retained by one or more support tracks during a normal mowing operation. In particular, the embodiments relate to an automated mowing apparatus for an automated mowing operation. The embodiments described herein also provide a track module for constructing a support track used in a mowing apparatus. The embodiments described herein further provide a grass maintenance system including various grass maintenance devices, which can be interchangeably used on a support track.

According to the first aspect of the invention, a mowing apparatus is provided and comprises at least one support track adapted to be mounted to an area to be maintained and a mowing device adapted to be supported on the support track. The mowing device of the mowing apparatus comprises a power supply for moving the mowing device along the support track and for operating the mowing device to carry out a mowing operation. The support track of the mowing apparatus is configured to guide the mowing device to move along the support track during a normal mowing operation.

The mowing device of the mowing apparatus can comprise a mowing unit and a rolling unit, which is rotatably supported by the mowing unit and can be driven by the power supply to drive the mowing unit along the support track. In one example, the rolling unit can comprise a driving unit rotatably supported on the support track. In another example, the rolling unit can comprise a guiding unit rotatably supported on the support track and a driving unit supported on the area to be maintained. In a further example, the rolling unit of the mowing device can comprise a longitudinal moving portion movably supported on the at least one support track and a transverse moving portion movably supported by the longitudinal moving portion of the rolling unit. The transverse moving portion of the rolling unit is configured to support the mowing unit to move along the longitudinal moving portion of the rolling unit.

The support track of the mowing apparatus comprises an elongated channel wall for preventing the mowing device from being separated from the support track in a lateral direction of the support track. The elongated channel wall on the support track has a C-shaped cross section for receiving at least part of the mowing device. In another example, the support track comprises a pair of support tracks arranged to be parallel to each other. The elongated channel walls on the pair of support tracks are arranged to open toward each other to thereby retain the mowing device on the support track.

In a preferred embodiment, the support track of the mowing apparatus can comprise a plurality of first track modules, each of which can comprise a base portion, sidewall sections connected with the base portion, and a support section formed on each of the sidewall sections. The support sections of each first track module are capable of joining with the respective support sections of another first track module to form at least part of a supporting surface of the support track. In one example, the first track modules can form a linear portion of the support track.

Additionally or alternatively, the support track comprises one or more second track modules. In one example, the second track module can comprise a base portion, a sidewall section connected with the base portion of the second track module, and a support section formed on the sidewall section of the second track module. The support section of the second track module is capable of joining with one of the support sections of a first track module to form at least part of the supporting surface of the support track. The second track modules can form a curved portion of the support track.

In one embodiment, a track module is provided and comprises a base portion formed with one or more water openings, at least one sidewall section connected with the base portion, and a channel wall formed on the sidewall section and forming a channel section for receiving at least one of a driving wheel and a guiding wheel of a grass maintenance device. The channel section of the channel wall extends in a longitudinal direction to allow at least one of a driving wheel and a guiding wheel of a grass maintenance device to move inside the channel section along the longitudinal direction of the channel section.

In one example, the sidewall section of the track module can comprise a pair of sidewall sections. In another example, the channel walls on the pair of sidewall sections have a C-shaped cross section and open toward each other. In a further example, the channel section of the track module is curved along the longitudinal direction of the channel section.

The track module can further comprise complementary interlocking structures for connecting with a similarly formed track module.

According to a further aspect of the invention, a grass maintenance system is provided and comprises at least one support track adapted to be mounted to an area to be maintained. The grass maintenance system also comprises one or more grass maintenance devices adapted to be supported on the support track. Each of the grass maintenance devices comprises a power supply for moving the grass maintenance device along the support track and for operating the grass maintenance device to carry out a grass maintenance operation. The support track is configured to guide the grass maintenance devices to move along the support track during a normal grass maintenance operation. The at least one pair of support tracks are each configured to comprise a longitudinal channel having a C-shaped cross section and opening toward the other one of the pair of support tracks, and one of the one or more grass maintenance devices is partially received in the longitudinal channels, so that the one of the one or more grass maintenance devices is movable along the longitudinal channels in the pair of support tracks but is inseparable therefrom during a normal grass maintenance operation. The grass maintenance devices of the grass maintenance system can each comprise a grass maintenance unit and a driving unit rotatably supported by the grass maintenance unit and driving the grass maintenance unit along the support track. The grass maintenance devices can have different grass maintenance units, such as a mowing device, an aerating device, a fertilizing device, a rolling device, and a sweeping device. In another example, the different grass maintenance devices can be formed to have a same driving unit to allow the grass maintenance devices to be used interchangeably with the support track.

The grass maintenance system can further comprises a storage station positioned at at least one of an origination location and an end location of the at least one support track. The storage station can comprise a storage housing for enclosing one end portion of the at least one support track. The storage housing in the grass maintenance system is capable of protecting the grass maintenance devices from unauthorized removal from the support track when the grass maintenance devices are locked inside the storage housing.

### BRIEF DESCRIPTION OF THE DRAWINGS

The following description is set forth in connection with the attached drawing figures, which are not necessarily to scale, emphasis instead generally being placed upon illustrating the principles of the invention. In the drawing figures:
Fig. 1 is a perspective view of a mowing apparatus formed according to a first embodiment;
Figs. 2a through 2f illustrate various embodiments of a mowing device of the mowing apparatus;
Fig. 2g is a side view of the mowing device shown in Fig. 2f;
Figs. 3a through 3g illustrate various embodiments of a support track of the mowing apparatus for supporting the various mowing devices;
Fig. 4 shows an example of a support track layout according to the mowing apparatus;
Figs. 5a through 5n illustrate various embodiments of track modules configured to form a support track in a mowing apparatus;
Fig. 6 shows a mowing apparatus formed according to an alternative embodiment; and
Figs. 7a through 7d show various alterative grass maintenance devices in the grass maintenance system.

### DETAILED DESCRIPTION OF THE EMBODIMENTS

Various embodiments of the mowing apparatus and the grass maintenance system are described below in connection with the drawing figures. In the following description of different embodiments, similar structures or components are designated with the same numeral reference and redundant description is omitted.

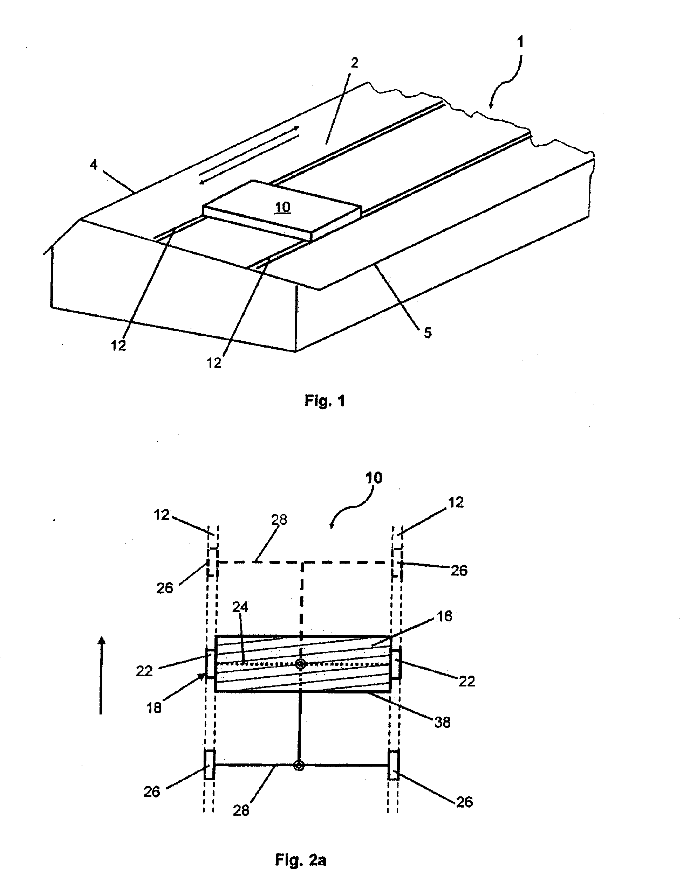

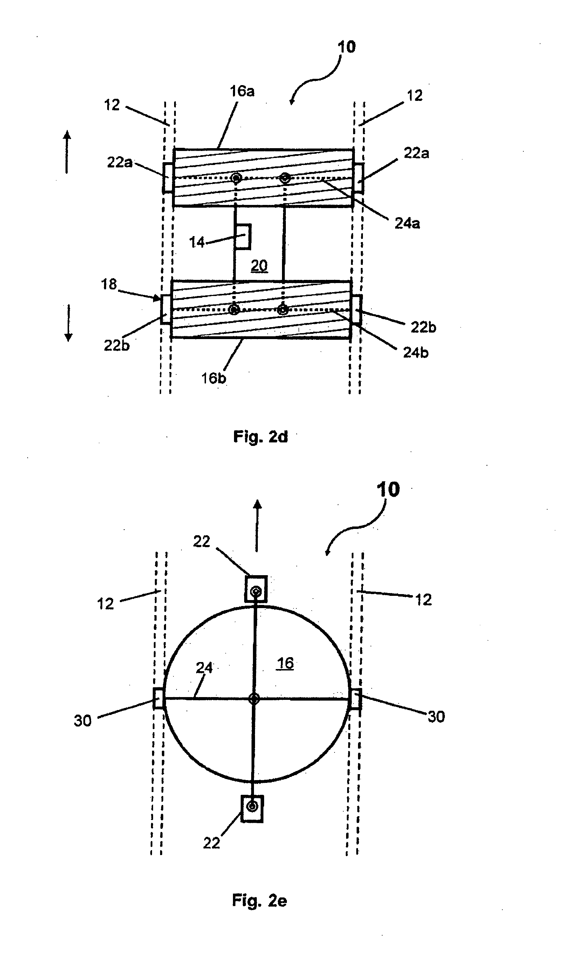

Fig. 1 shows a first embodiment of a mowing apparatus 1 formed to carry out a mowing operation. The mowing apparatus 1 can comprise a mowing device 10 and one or more support tracks 12, which are configured to support and retain the mowing device 10 on the support tracks 12. The mowing device 10 can be configured to move along the support tracks 12 during a normal mowing operation. In one example, the operation of the mowing device 10 can be automated through a power supply 14 (see Fig. 2d) and control circuits of various forms. Additionally or alternatively, the support tracks 12 of the mowing apparatus 1 can be configured to be fixed in relation to the area to be mowed. For example, the support tracks 12 can be mounted on the rooftop 2 of a house.

The various units and components forming the mowing apparatus 1 will be described in great detail below.

### 1. Mowing Device

Figs. 2a through 2g show various embodiments of the mowing device 10 in the mowing apparatus 1. The mowing device 10 can include a mowing unit 16 configured in various forms to carry out a mowing operation. The mowing unit 16 of the mowing device 10 can be supported on a rolling unit 18. The rolling unit 18 can operate to move along the support tracks 12 during the mowing operation and carry the mowing unit 16 to move along the support tracks 12. In one example, a power supply 14 can be employed to operate the mowing unit 16 to cut or trim grass.

Additionally or alternatively, the power supply 14 can operate to drive the rolling unit 18 along the support tracks 12 to automate the mowing operation of the mowing device 10.

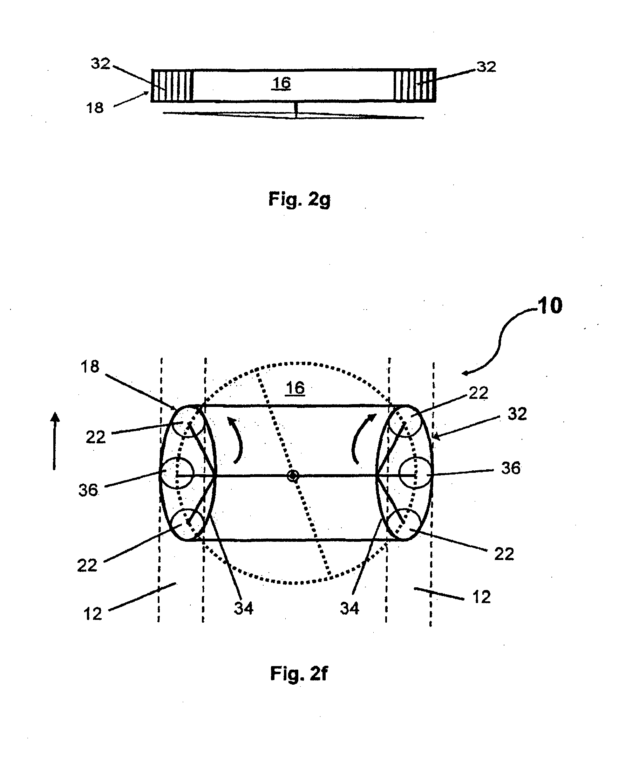

The mowing unit 16 of the mowing device 10 can have a cutting member 18 (see Fig.2g) formed in any of various known forms for cutting or trimming grass during the mowing operation. In an example shown in Fig. 2a, the mowing unit 16 of the mowing device 10 is formed similarly to a known reel-type mower. For example, the reel-type mowing unit 16 can include a blade reel, which cooperates with a stationary cutter blade in the reel-type mowing unit 16 to cut or trim grass. In this example, the rolling unit 18 of the mowing device 10 can include one or more driving wheels 22, which can be driven by the power supply 14 along the support tracks 12 of the mowing apparatus 1 during a normal mowing operation. For example, the rotation of the driving wheels 22 can be transmitted to the blade reel of the mowing unit 16 to carry out the mowing operation. The configuration and operation of such a reel-type mowing unit 16 and a mowing device 10 are understood by one skilled in the art.

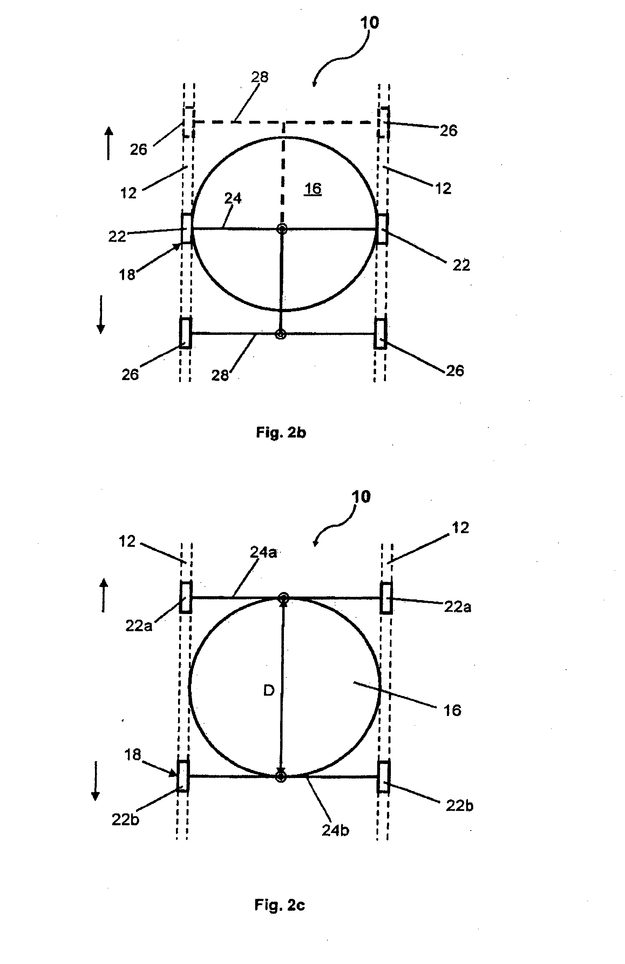

In alternative examples shown in Figs. 2b and 2c, the mowing unit 16 of the mowing device 10 can be configured to be similar to a gas-powered or steam-powered mower, the configuration and operation of which are known to one skilled in the art. In this example, the rolling unit 18 is similar to the rolling unit 18 shown in Fig. 2a or formed differently therefrom. The rolling unit 18 of the mowing device 10 can be driven by the power supply 14 to move along the support tracks 12 of the mowing apparatus 1 during a normal mowing operation. One skilled in the art will appreciate that the mowing unit 16 of the mowing device 10 can be formed in various other forms to achieve the same purpose.

The rolling unit 18 of the mowing device 10 can be configured in various forms to support the mowing unit 16 and/or drive the same along the support tracks 12 during a normal mowing operation. For example, the rolling unit 18 of the mowing device 10 can include a base carrier 20 (Fig. 2d) of various forms, on which the mowing unit 16 is mounted and supported. Additionally or alternatively, the rolling unit 18 of the mowing device 10 can include one or more driving wheels 22 rotatably mounted to the base carrier 20 of the rolling unit 18 for driving the mowing device 10 to move along the support tracks 12, during a normal mowing operation. In one example, the driving wheels 22 of the rolling unit 18 can be supported and driven by a driving axle 24 of the rolling unit 18 through the power supply 14.

The driving wheels 22 of the rolling unit 18 can be arranged in various forms, In the examples shown in Figs. 2a to 2f, the driving wheels 22 are arranged to space apart from each other in a direction transverse to the mowing direction and be properly supported on a pair of parallel support tracks 12. For example, the driving wheels 22 of the rolling unit 18 can be received and retained in the respective elongated channels 50 formed on the support tracks 12 as will be described in great detail below.

In the examples shown in Figs. 2a and 2b, the rolling unit 18 of the mowing device 10 can also include one or more balancing wheels 26 to assist in balancing and/or stabilizing the mowing device 10 during the mowing operation. For example, the mowing unit 16 can be supported and carried by the driving wheels 22 with assistance from the balancing wheels 26 in the rolling unit 18. In one example, the balancing wheels 26 can be supported to freely rotate around a balancing shaft 28 of the rolling unit 18. The balancing wheels 26 of the rolling unit 18 can be configured to be either directly supported on the area surface to be maintained or to be supported on and retained by the support tracks 12 as are the driving wheels 22 of the rolling unit 18. In one example, the balancing wheels 26 of the rolling unit 18 can be received and retained in the respective elongated channels 50 formed on the support tracks 12. The balancing wheels 26 can be arranged either in the front of (see balancing wheels 26 shown in phantom lines in Figs. 2a and 2b) or behind the driving wheels 22 in a mowing direction indicated by the arrows in Figs. 2a and 2b.

In another example shown in Fig. 2c, the rolling unit 18 of the mowing device 10 can include two pairs of driving wheels 22 for moving the mowing unit 16 in opposite directions during a normal mowing operation. The mowing unit 16, such as a gas-powered or steam-powered mower, is supported between the driving axles 24 of the rolling unit 18. Balancing wheels are not necessary in this example. The driving wheels 22 on the respective driving axles 24 can be alternatively driven, such as by the power supply 14, depending on the moving direction of the mowing device 10. In such a case, the mowing device 10 has a symmetric configuration and can operate in either the forward or the backward moving direction during the mowing operation.

In a further example shown in Fig. 2d, the rolling unit 18 of the mowing device 10 is configured to support two mowing units 16a, 16b, one of which operates in a respective forward and backward moving direction of the mowing device 10. For example, the mowing units 16a, 16b of the rolling unit 18 can be reel-type mowing units each supported by a respective pair of driving wheels 22a, 22b. In one example, the mowing unit 16a can be supported on the driving axle 24a between the driving wheels 22a and carry out the mowing operation when the mowing device 10 moves in the direction shown by the upper arrow shown in Fig. 2d. In another example, the mowing unit 16b can be supported on the driving axle 24b between the driving wheels 22b and carry out the mowing operation when the mowing device 10 moves in the direction indicated by the lower arrow shown in Fig. 2d. In an alternative example, the driving wheels 22a, 22b of the rolling unit 18 can be driven to move in the same direction resulting in a 4-wheel drive rolling unit 18.

In the example shown in Fig. 2e, the driving wheels 22 of the rolling unit 18 are spaced apart from each other in the moving direction of the mowing device 10 and adapted to roll on the area surface to be maintained. One or more guiding wheels 30 are provided in the rolling unit 18 to support the mowing unit 16 on the respective support tracks 12. For example, the guiding wheels 30 can be mounted to the lateral opposite ends of the mowing unit 16 and freely rotate in relation thereto. In addition, the guiding wheels 30 can be received and retained in the respective elongated channels 50 formed on the support tracks 12 as will be described in great detail below. As is shown in Fig. 2e, the mowing device 10 can be driven by the driving wheels 22 while being supported and guided by the guiding wheels 30 along the support tracks 12 and retained in the elongated channels 50 of the support tracks 12.

In a further example, of the mowing device 10 can be formed to comprise one or more track assemblies 32 mounted to the mowing unit 16 as is shown in Figs. 2f and 2g. Each track assembly 32 can include a continuous track 34 rotatably supported on the support track 12 by a plurality of driving wheels 22. For example, the driving wheels 22 can be rotatably mounted at each opposite lateral end of the mowing unit 16 to rotatably support the corresponding continuous track 34 of the track assembly 32. The driving wheels 22 and the corresponding continuous track 34 are configured and arranged in a friction contact. In one example, the rotation axis of the track assembly 32 can be orientated in the transverse direction. When the driving wheels 22 rotate, the track assemblies 32 can carry the mowing unit 16 to move in a mowing direction parallel to the support tracks 12, as will be described in further details in the embodiments below. The continuous track 34 and the driving wheels 22 of the track assembly 32 can have their rotation axes extending either in the transverse direction or in a direction perpendicular to the area surface to be serviced, as will be described in further details below.

As Fig. 2f shows, the track assembly 32 of the rolling unit 18 can also comprise one or more supporting wheels 36 arranged on each lateral end of the mowing unit 16. Such supporting wheels 36 can support the continuous track 34 of track assembly 32 on or against the support track 12 during a normal mowing operation. Additionally or alternatively, the supporting wheels 36 can be so arranged to support the continuous track 34 and assist the same in carrying out an endless rotation. As one skilled in the art will appreciate, the track assembly 32 can be formed similar to that in a tracked vehicle.

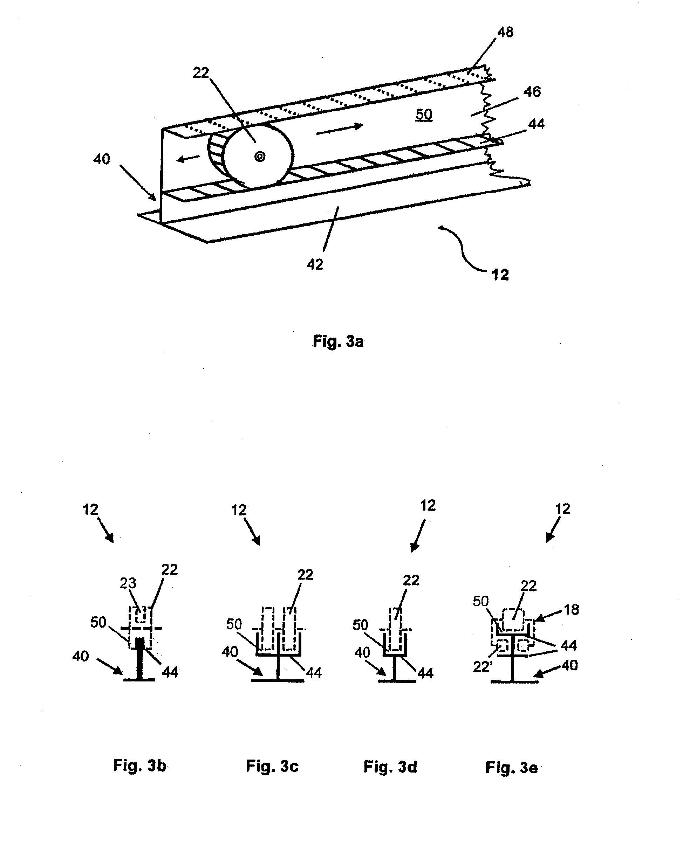

The various rolling units 18 described in the above embodiments and examples can be configured in various forms to improve motion transmission during a normal mowing operation. In one example, the driving wheels 22 of the rolling unit 18 can be configured to increase traction between the driving wheels 22 and the support tracks 32 and prevent skidding during the mowing operation. For example, the driving wheels 22 of the rolling unit 18 can be formed as rubber wheels. In another example, the driving wheels 22 of the rolling unit 18 can be gear wheels 53 to cooperate with one or more corresponding toothed support tracks 12, as is best shown in Fig. 3b and described in further details below.

Additional units and components can be provided in the mowing device 10 to control its operation or to protect the mowing device 10. In one example, sensors or other electronic components can be employed in the mowing device 10 to optimize its automated mowing operation. In another example as shown in Fig. 2a, the mowing device 10 is formed to have a housing 38 to protect the various units and components of the mowing device 10 from environmental or seasonal erosion. The external surfaces of the protective housing 38 can be provided with decorative designs or advertising information. For example, at least part of the housing 38 of the mowing device 10 can be formed to have the shape of flowers, plants animals, cartoon characters, and/or other aesthetic designs.

### 2. Support track

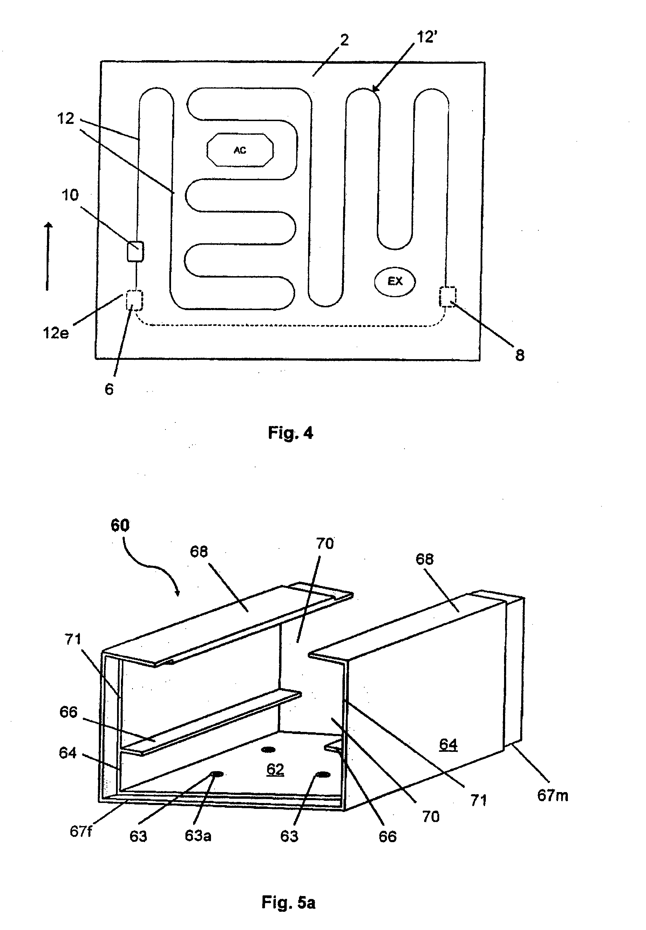

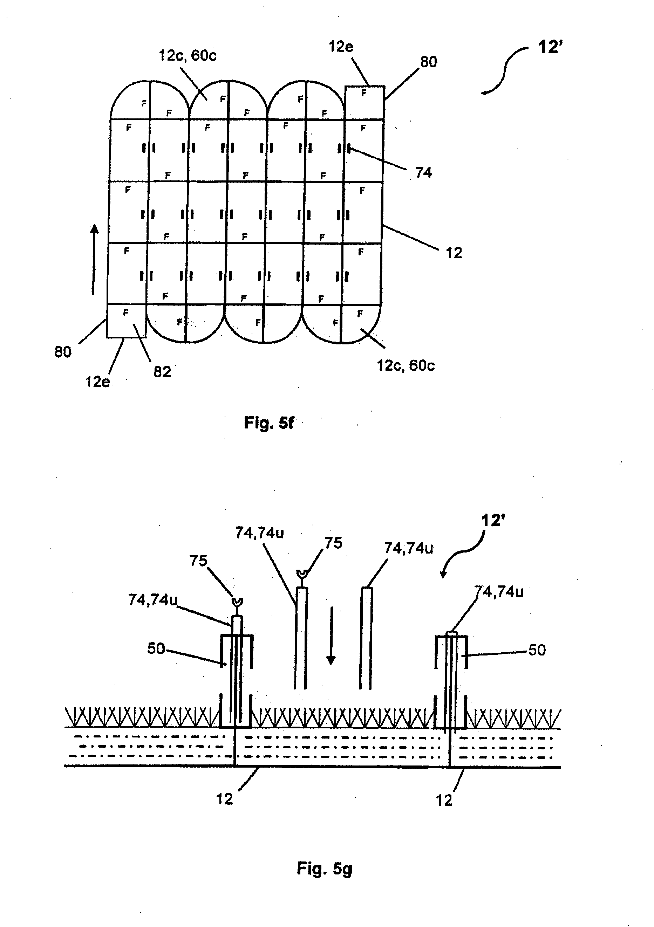

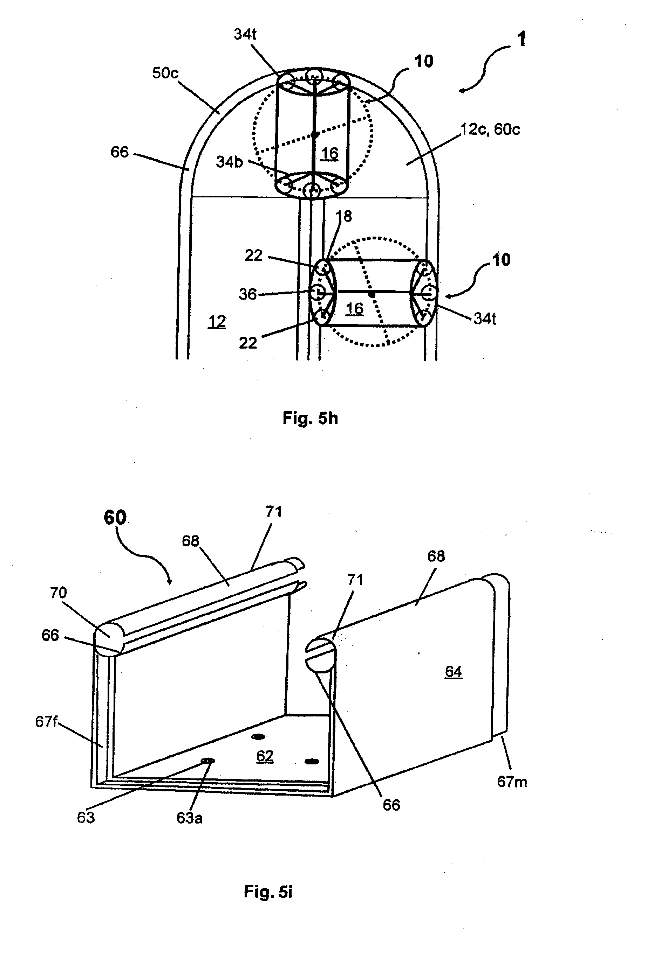

The support track 12 in the mowing apparatus 1 can be configured in various forms to support the mowing device 10 during a normal mowing operation. For example, the support track 12 can be formed to have an elongated shape, which can define at least part of the travel path of the mowing device 10 as will be described in great details below. In the example of Fig. 3a, the support track 12 in the mowing apparatus 1 can extend in a straight line. In the examples shown in Figs. 4, 5g, and 5i-5j, the support tracks 12 can have a carved shape.

The support track 12 of the mowing apparatus 1 can include a base portion 40 configured in various forms to be mounted to an area to be maintained by the mowing device 10. For example, the base portion 40 of the support track 12 can be formed to have an extended footing 42 to be mounted to a fixture, such as a building rooftop 2. In one example shown in Fig. 3a, the extended footing 42 can be formed similar to that of an l-beam. Additional mounting mechanisms can be used to facilitate in mounting the extended footing 42 of the support track 12 to the fixture as will be understood by one skilled in the art.

The support track 12 of the mowing apparatus 1 can be formed with a supporting surface 44 supported on the base portion 40 of the support track 12. The supporting surface 44 of the support track 12 can support the mowing device 10 in an elevated position from the extended footing 42 of the support track 12. In one example, the supporting surface 44 can be formed in various forms to support the rolling unit 18. For example, the driving wheels 22, the balancing wheels 26, the guiding wheels 30, and/or the track assemblies 34 of the rolling unit 18 can be supported by and move on the supporting surface 44. In the example shown in Fig. 3a, the supporting surface 44 of the support track 12 can be formed to have an elongated shape. The supporting surface 44 can extend in a straight line as is shown in Fig. 3a or in a curved line as is shown in Figs. 4,5f, 5h, and 5i.

Additionally or alternatively, the support track 12 of the mowing apparatus 1 can be formed to have one or more retaining portions 46, 48 for retaining the mowing device 10 on the supporting surface 44 of the support track 12 during a normal mowing operation. For example, the retaining portions 46, 48 of the support track 12 can be elongated wall sections extending along the supporting surface 44 of the support track 12. As is shown in Fig. 3a, after the mowing device 10 is supported on the supporting surface 44 of the support track 12, the retaining portion 46 can restrict the mowing device 10 from right-side lateral movement toward the retaining portion 46, while allowing the mowing device 10 to move in the longitudinal direction of the support track 12, as is indicated by the arrows in Fig. 3a. Additionally or alternatively, the retaining portion 48 can restrict the mowing device 10 from upward movement, while allowing the mowing device 10 to move in the longitudinal direction of the support track 12. As will be described in great details below, when the support tracks 12 are used in pairs, the paired support tracks 12 can restrict the mowing device 10 from lateral and upward movement and retain the mowing device 10 on the support track 12 during a normal mowing operation.

In one example, the support track 12 of the mowing apparatus 1 can be formed to have an elongated channel 50 extending along the support track 12 for receiving at least part of the rolling unit 18 of the mowing device 10. For example, the elongated channel 50 in the support track 12 can be formed to support the driving wheels 22, the balancing wheels 26, the guiding wheels 30, and/or the track assemblies 34 of the rolling unit 18. In one example, the elongated channel 50 in the support track 12 can be at least partially defined by the elongated supporting surface 44. In addition, one or more of the retaining portions 46, 48 of the support track 12 can define part of the elongated channel 50 in the support track 12.

In the example shown in Fig. 3a, the elongated channel 50 in the support track 12 can be formed to have a C-shaped cross-section. The supporting surface 44 of the support track 12 forms the bottom section of the C-shaped elongated channel 50. The retaining portions 46, 48 of the support track 12 are positioned to limit the movement of the mowing device 10 in directions transverse to the moving direction of the mowing device 10. For example, the lateral retaining portion 46 of the support track 12 is provided and extends upwardly from the supporting surface 44 of the support track 12 and forms a stop to prevent the mowing device 10 from moving laterally in the direction toward the retaining portion 46 and off the support track 12. The top retaining portion 48 is provided and extends from the lateral retaining portion 46 to prevent the mowing device 10 from departing the support track 12 in an upward direction. As one skilled in the art will appreciate, the elongated channel 50 in the support track 12 can be in various other forms and/or other cross-sectional shapes as will be described in the following embodiments.

When a pair of such support tracks 12 are used and arranged parallel to each other, such parallel support tracks 12 can retain the mowing device 10 in a predetermined lateral position in relation to the longitudinal direction of the parallel support tracks 12. For example, the two support tracks 12 can be arranged so that their elongated channels 50 face toward each other. After the mowing device 10 is assembled with the parallel support tracks 12, the driving wheels 22, the balancing wheels 26, the guiding wheels 30, and/or the track assemblies 34 of the rolling unit 18 on the mowing device 10 can be retained inside the elongated channels 50 in the support tracks 12. The mowing device 10 is thereby restricted from lateral and upward movement while being allowed to move along the elongated channels 50 in the longitudinal direction of the supporting tracks 12, as will be described in further detail below.

The support tracks 12 of the mowing apparatus 1 can be configured In various other forms to achieve the above-mentioned purpose of supporting and guiding the mowing device 10 during a normal mowing operation, while preventing the mowing device 10 from being separated from the support tracks 12. Figs. 3b through 3e are cross-sectional views of partial mowing apparatus 1 showing the configuration of various support tracks 12 in support of the driving wheels 22 of the mowing device 10. In the example shown in Fig. 3b, the support track 12 is configured to support a driving wheel 22 formed similarly to a train wheel. In this example, the base portion 40 of the support track 12 has an elongated top edge fitted inside a circumferential groove 23 on the driving wheel 22 to thereby restrict the driving wheel 22 from lateral movement. Figs. 3c and 3d show support tracks 12, in which the base portions 40 are formed with U-shaped structure for accommodating one or more driving wheels 22 and retaining the same on the support track 12 during the normal mowing operation. Fig. 3e shows another configuration of the support track 12, which has multiple supporting surfaces 44 to support a driving wheel 22 and additional supporting wheels 22'. In this example, the rolling unit 18 can comprise a driving wheel 22 and one or more additional supporting wheels 22' rotatably supported in relation to the support track 12. The additional supporting wheels 22' can be positioned between the supporting surfaces 44. The configuration of the support track 12 shown in Fig. 3e can retain the driving wheel 22, as well as the additional support wheels 22', of the rolling unit 18 on the support track 12, to thereby prevent unauthorized removal of the rolling unit 18 and the moving device 10 from the support track 12.

As one skilled in the art will appreciate, the support tracks 12 and the driving wheel 22 can be configured in various other forms, which are within the scope of the invention. In addition, although the above examples are described in connection with a driving wheel 22 being supported on the support track 12, the various forms of support tracks 12 described above can be used to support balancing wheels 26, guiding wheels 30, and/or track assemblies 34 of the rolling unit 18 on the mowing device 10.

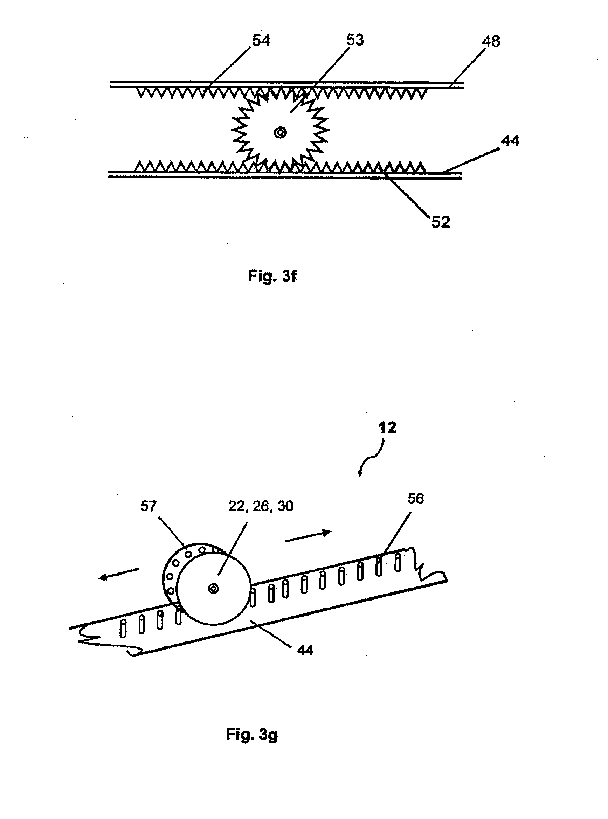

Additionally or alternatively, the support track 12 can be formed to include additional traction mechanism to assist the mowing device 10 in moving along the support track 12 during a normal mowing operation. For example, part of the elongated channel 50 can be formed in various forms to enhance the traction between the rolling unit 18 and the support track 12. In one example, the supporting surface 44 can be textured to increase friction between the supporting surface 44 and the driving wheels 22, balancing wheels 26, guiding wheels 30, and/or track assemblies 34 of the rolling unit 18 in the mowing device 10. In an alternative example shown Fig. 3f, the supporting surface 44 can be formed with multiple teeth 52 for engaging with the driving wheels 22, the balancing wheels 26, and/or the guiding wheels 30 on the mowing device 10, which can be in the form of gear wheels 53. In a further example shown in Fig. 3g, the supporting surface 44 can be formed with multiple pins 56 for engaging with corresponding holes 57 formed on the driving wheels 22, the balancing wheels 26, and/or the guiding wheels 30 on the mowing device 10. Various other forms of traction mechanisms can be applied to the support track 12 to achieve the same purpose.

As one skilled in the art will appreciate, other forms of traction mechanisms can be employed to enhance the traction between the mowing device 10 and the support track 12. For example, the underside of the top retaining portion 48 can be textured. In the example shown in Fig. 3f, the top retaining portion 48 can be formed with teeth 54 for engaging with the driving wheels 22, the balancing wheels 26, the guiding wheels 30, and/or the track assemblies 34 on the mowing device 10. In another example, the driving wheels 22, the balancing wheels 26, and/or the guiding wheels 30 of the rolling unit 18 can be formed as rubber wheels to enhance the traction with the supporting surface 44 on the support track 12.

### 3. Power Supply

Various types of power supply 14 can be used to operate the mowing device 10 during a normal mowing operation. For example, the power supply 14 can be employed to carry out a mowing operation and/or drive the mowing device 10 to move along the support track 12 during a normal mowing operation. As is discussed above, the mowing unit 16 of the mowing device 10 can be gas-powered or steam-powered. In another example, the power supply 14 can include solar panels to utilize the solar power. For example, solar panels can be installed on the housing 38 of the mowing device 10 to generate electrical power, which can be applied to operate the mowing unit 16 and/or to drive the rolling unit 18 along the support track 12 during a normal mowing operation.

Additionally or alternatively, the mowing device 10 can be electrically powered. In one example, the mowing device 10 can include one or more batteries, such as rechargeable batteries, which supply power to operate the mowing unit 16 and/or to drive the rolling unit 18 along the support track 12. As will be described in details below, such rechargeable batteries can be charged as needed at a storage unit of the mowing apparatus 1, using the electrical power from a standard power outlet.

In an alternative example, the standard power outlet can be used to supply power directly to the mowing unit 16 and/or the rolling unit 18 of the mowing device 10 through an electrical cable connected between the mowing device 10 and the standard power outlet In one example, the electrical cable is formed to be automatically retractable when the mowing device 10 is returning to the standard power outlet to avoid the electrical cable from slacking. In another example, the support track 12 can be employed to transmit electrical power from a standard power outlet to the mowing device 10. As one skilled in the art will appreciate, various other types of power supplies and power transmission can be used to operate the mowing device 10 and achieve the same purpose.

### 4. Track Patterns and Track Modules

The one or more support tracks 12 in the mowing apparatus 1 can be configured and arranged to form various patterns on an area to be maintained, so as to allow the mowing device 10 to move along the support tracks 12 and through part or substantially the entire area to be maintained. Various embodiments of forming the track patterns will be described in great detail below.

In one embodiment, the support tracks 12 can be mounted on an area to be maintained, such as a building rooftop 2 where green roof is formed. The supporting tracts 12 can be arranged in various track patterns. For example, the support tracks 12 can be arranged to be parallel to the roof ridge 4 of a house, as is shown in Fig. 1, thereby allowing one or more mowing devices 10 to operate in a direction parallel to the roof ridge 4 of the house. Additional support tracks 12 can be employed and similarly arranged to maintain the remaining area of the building rooftop 2.

In another embodiment, one or more support tracks 12 can be arranged in a continuous pattern 12' on the area to be maintained (e.g., a building rooftop 2) to guide the mowing device 10. Such a track pattern 12' can be determined according to the building roof structure. For example, the track pattern 12' can extend from one side of the building rooftop 2, around any ventilation duct, and toward an opposite side of the building rooftop 2. In one example shown in Fig. 4, at least part of the track pattern 12' is arranged in a serpentine pattern on the area to be maintained. In another example shown in Fig. 5f, the track pattern 12' is arranged in a serpentine pattern to cover substantially the entire area to be maintained.

In one example shown in Fig. 4, the track pattern 12' is arranged so that the mowing device 10 ends at a location 8 on the building rooftop 2 different from the origination location 6 after completing the mowing operation of the entire building rooftop 2. In this example, the mowing device 10 can be configured to carry out a mowing operation when the mowing device 10 moves in a reversed direction, in addition to a forward direction from the origination location 6 to the end location 8 on the building rooftop 2. In another example, the track pattern 12' can be arranged to allow the mowing device 10 to return to the origination location 6, as is shown by the phantom line connecting the origination location 6 and the end location 8 in Fig. 4, thereby completing an enclosed loop.

In a preferred embodiment, the support tracks 12 and/or the track pattern 12' can be formed by one or more types of track modules 60, which can be interconnected and assembled to one another to cover the area to be maintained by the mowing device 10. Figs. 5a to 5n show various embodiments of track modules 60, which can be similarly formed and assembled to one another to form the support tracks 12 of the mowing apparatus 1 as will be described in great details below.

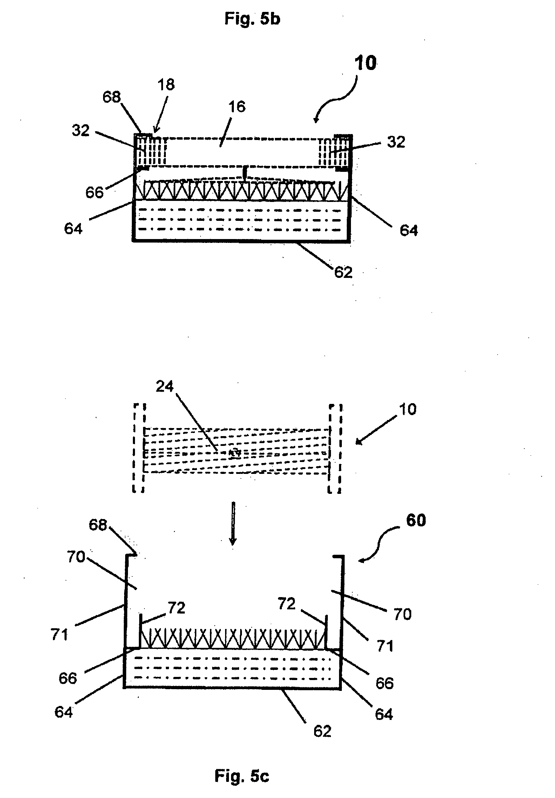

Figs. 5a and 5b show a first embodiment of the track module 60. The track module 60 can have a base section 62 configured in various forms to support the track module 60 on the area to be maintained. In the example shown in Fig. 5a, the base portion 62 of the track module 60 can be formed with various water retention structures, components, and mechanisms 63 allowing water to remain in the track module 60. The water retention structures, components, and mechanism 63 can also include an opening 63a through which excess water can exit the track module 60.

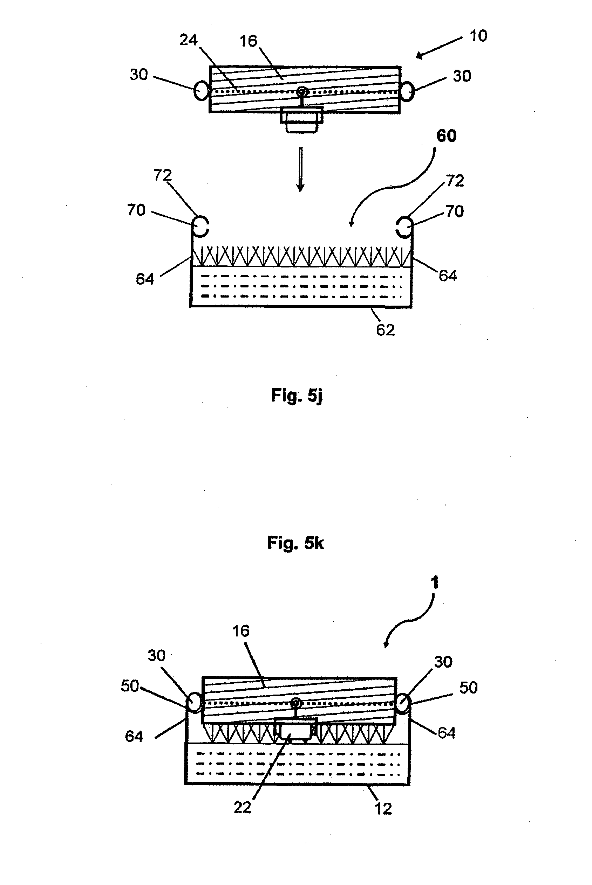

The base portion 62 of the track module 60 is adjoined to two sidewall sections 64, which extend upwardly from the base portion 62 in the finished track module 60. In the example shown in Fig. 5a, the two sidewall sections 64 of the track module 60 are planar in shape and parallel to each other, In an alternative example as is shown in Figs. 5i and 5j, the sidewall sections 64 of the track module 60 can be at least partially curved to form a curved support track 12c as will be described in further detail below.

The sidewall sections 64 of the track module 60 can be configured in various forms to support and retain a mowing device 10 on the track module 60. On each sidewall section 64 the track module 60, a support section 66 is formed for supporting the rolling unit 18 of the mowing device 10 during a normal mowing operation. A top retaining section 68 is formed along the top edge of each sidewall 64 to retain the rolling unit 18 on the support section 66. The sidewall sections 64 and the corresponding support sections 66 and top retaining sections 68 of the track module 60 form channel sections 70, along which the rolling unit 18 can be supported and move. For example, the driving wheels 22 of the rolling unit 18 can be supported in the channel sections 70. For purpose of simplicity, the sidewall section 64, a corresponding support section 66, and a corresponding top retaining section 68 defining the channel section 70 of the track module 60 is referred to as a channel wall 71. Such channel wall 71 can have various cross-sectional shapes. In the examples of Figs. 5a and 5b, the channel wall 71 has a C-shaped cross section.

As Figs. 5a and 5b show, a pair of channel sections 70 are formed in the track module 60 and face toward each other for receiving and supporting the rolling units 18 formed at the lateral ends of the mowing device 10. In the example shown in Fig. 5b, the mowing device 10 is formed to be similar to the rolling unit 18 shown in Fig. 2f and can include track assemblies 32 as part of the rolling unit 18. The track assemblies 32 of the rolling unit 18 can be movably received and supported in the pair of channel sections 70 of the track module 60, and in the respective parallel elongated channels 50 of the support track 12 formed by such track modules 60. During a normal mowing operation, the rolling unit 18 of the mowing device 10 can be driven (e.g., by the power supply 14) to move along the elongated channels 50 of the support track 12 and to carry the mowing unit 16 in a mowing direction along the support track 12. As one skilled in the art will appreciate, the mowing device 10, the support tracks 12, and the mowing apparatus 1 can be formed and operate in various other forms.

In the example of Fig. 5c, the channel wall 71 has a G-shaped cross section, which is partly defined by a guard section 72 joined to the support section 66 of the track module 60 and extending upwardly therefrom. The guard section 72 on the track module 60 can prevent grass and/or earth to reach the support section 66 of the track module 60. When the track module 60 is filled with grass and earth as is shown in Fig. 5c, the grass and/or earth can reach above the support sections 66, so that the track module 60 can be filled with a thicker layer of grass and earth. Additionally or alternatively, the guard section 72 of the track module 60 can prevent grass or dirt from entering the channel section 70 to adversely block the travel path of rolling unit 18 during a normal mowing operation.

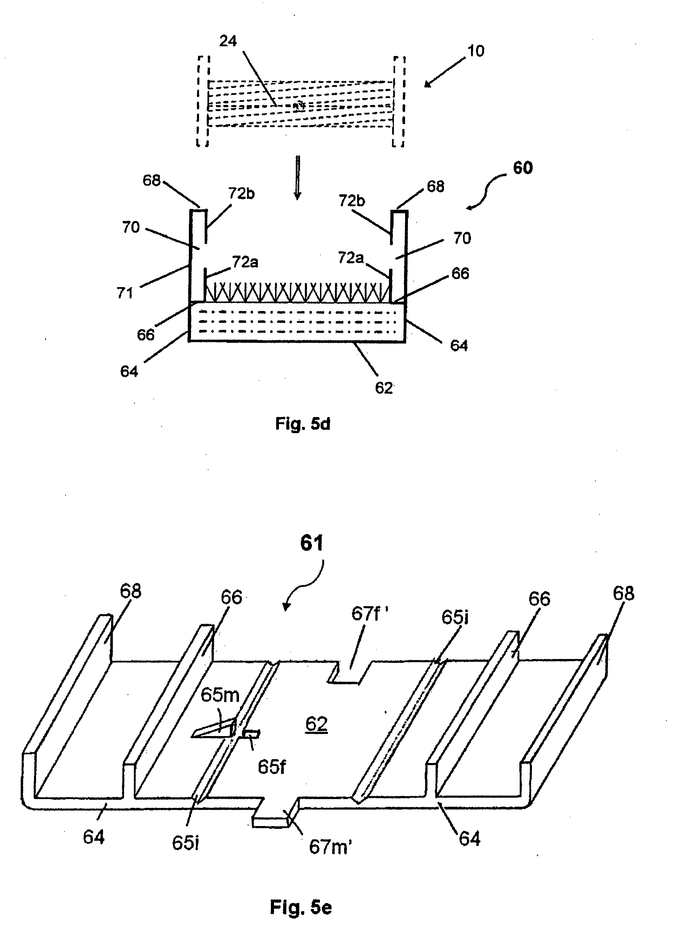

In a further example shown in Fig. 5d, the cross section of the channel wall 71 can be a variation of a C-shape, in which guard sections 72a, 72b can extend from the support section 66 and the top retaining section 68, respective, and toward each other to define a narrower opening of the channel section 70. In a preferred embodiment, the narrower opening of the channel section 70 can have a minimum size to allow the driving shaft 24 (see Figs. 2a and 2b) and/or balancing shaft 28 (see Figs. 2a and 2b) of the rolling unit 18 to pass therethrough. In such a case, the narrower opening of the channel section 70 can prevent grass or dirt from entering the channel section 70 and accumulating on the support section 66 of the track module 60 to block the travel path of the rolling unit 18.

Additional structures, components, and mechanisms can be provided to the track module 60 improve its performance. In one example shown in Fig. 5e, the track module 60 can be formed with various additional supporting structures, components, and mechanisms 65i, 65m, 65f to support the sidewall sections 64 in the track module 60. Additionally or alternatively, the track modules 60 can be formed with various additional adjoining structures, components, and mechanisms to enhance the interconnection between adjoining track modules 60. These and additional supporting and adjoining structures, components, and mechanisms will be described in further details below.

The track modules 60 can be formed by various methods. For example, a molding process can be employed to form the track module 60. In one example, the track module 60 can be formed from a module blank 61 shown in Fig. 5e during manufacture. The module blank 61 can have a substantially flat shape formed with a base section 62 and two sidewall sections 64 joined to the opposite lateral sides of the base section 62. Support sections 66 and top retaining sections 68 are formed on the track modules 60 extending transversely from the respective sidewall sections 64, as is shown in Fig. 5e. As one skilled in the art will appreciate, such substantially flat shape of the module blank 61 is advantageous for purposes of packaging, shipping, and storage of the track module 60.

To assemble the track module 60 from the module blank 61, the sidewall sections 64 of the module blank 61 are bent toward each other and positioned substantially perpendicular to the base section 62 of the track module 60 forming a U-shape. In the examples shown in Figs. 5a and 5b, the support sections 66 on the respective sidewall sections 64 can extend toward each other in the assembled track module 60. In addition, the top retaining sections 68 on the respective sidewall sections 64 can extend toward each other in the assembled track module 60. As is shown in Fig. 5e, the various supporting structures, components, and mechanisms can support and retain the final configuration of the track module 60, after the module blank 61 is assembled into the track module 60 shown in Figs. 5a and 5b.

For example, the supporting structures, components, and mechanisms can be in the form of one or more longitudinal intentions 65i located between the base section 62 and an adjoining sidewall section 64. In the example shown in Fig. 5e, the longitudinal intentions 65i has a V-shaped cross section, allowing the sidewall section 64 to be fold toward the base section 62 of the track module 60. In a preferred embodiment, the V-shaped cross section of the longitudinal intentions 65i can be about 90° when the module blank 61 is laid in a flat shape, to allow the sidewall section 64 and the base section 62 to form a right angle in the assembled track module 60, as is shown in Figs. 5a and 5b. Other supporting structures, components, and mechanisms 65 can be employed to achieve the same purpose.

Additionally or alternatively, the supporting structures, components, and mechanisms can be in the form of interlocking members. For example, the sidewall section 64 of the track module 60 can be formed with one or more ribs 65m (only one rib 65m is shown in Fig. 5e). The rib 65m can be formed so that a portion thereof is received in a complimentary cutout portion 65f in the base section 62 of the track module 60. When the ribs 65m and the cutout portion 65f are interconnected in the assembled track module 60, the ribs 65m can support the sidewall section 64 against impact in the longitudinal and/or transverse directions of the track module 60, to retain the sidewall section 64 in position relative to base section 62 in the assembled track module 60. Other supporting structures, components, and mechanisms can be employed to achieve the same purpose.

Multiple track modules 60 can be assembled to one another to form parallel support tracks 12 of the mowing apparatus 1. For example, the track modules 60 can be aligned with one another so that their support sections 66 can form the elongated supporting surface 44 of the support track 92 of the mowing apparatus 1. The various adjoining structures, components, and mechanisms can secure the interconnection between adjoining track modules 60.

For example, the track modules 60 can be formed with complimentary structures for interconnecting with adjoining track modules 60 in an assembled support track 12 of the mowing apparatus 1. In the example shown in Fig. 5a, the track module 60 can have transverse edges 67m, 67f on the base section 62 and/or the sidewall sections 64 and at the transverse edges of the track module 60. The transverse edges 67m, 67f have complimentary structures so as to match transverse edges 67f, 67m of adjoining track modules 60 in the assembled support track 12. As such, the transverse edges 67m, 67f of the adjoining track modules 60 can interconnect the adjoining track modules 60 in the assembled support track 12.

In one example, the complimentary transverse edges 67f, 67m on the sidewall sections 64 of the adjoining track modules 60 can at least partly restrict relative movement between the adjoining track modules 60 in the transverse direction. In another example, the complimentary transverse edges 67f, 67m on the base sections 62 of the adjoining track modules 60 can at least partly restrict relative movement between the adjoining track modules 60 in the direction that the adjoining track modules 60 are stacked. Additionally or alternatively, the transverse edges 67m, 67f on the track modules 60 can be formed to have a thinned profile comparing to the base section 62 and/or the sidewall sections 64 of the track module 60. Such thinned transverse edges 67m, 67f can overlap with complimentary thinned transverse edges 67m, 67f of an adjoining track module 60 when multiple track modules 60 are assembled together to form the support track 12. As one skilled in the art will appreciate from Fig. 5a, the thinned transverse edges 67m, 67f of adjoining track modules 60 can result in a smooth transition at the overlapped region of the adjoining track modules 60.

In another example shown in Fig. 5e, the complimentary structures on the track modules 60 can be in the form of a narrowed tongue portion 67m' extending from a transverse edge of the base section 62 of the track module 60. The narrowed tongue portion 67m' is adapted to be received and retained in a complimentary slot portion 67f in an adjoining track module 60 in the assembled support track 12. The interconnection between the narrowed tongue portion 67m' and the complimentary slot portion 67f' in the adjoining track modules 60 can at least partly restrict relative movement between the adjoining track modules 60 in the transverse direction of the support track 12.

When assembling the track modules 60 to form the parallel support tracks 12 of the mowing apparatus 1, track modules 60 of the same type are chosen. For example, multiple track modules 60 shown in Fig. 5a can be aligned with one another in the longitudinal direction and interconnected with one another other through the complimentary structures 67f, 67m on the adjoining track modules 60. In one example, the complimentary thinned transverse edges 67f, 67m on the base sections 62 of the adjoining track modules 60 are stacked to interconnect the adjoining track modules 60 in the assembled support track 12, as part of a track pattern 12' shown in Fig. 5f. In another example, the complimentary thinned transverse edges 67f, 67m on the sidewalls 64 of the adjoining track modules 60 are overlapped to interconnect the sidewall sections 64 of the adjoining track modules 60 in the assembled support track 12. In a further example, the narrowed tongue portion 67m' of a track module 60 shown in Fig. 5e can be inserted into the slot portion 67f ' in an adjoining track module 60 of the same type to interconnect these track modules 60 in the assembled support track 12.

The above described various complimentary structures 67f, 67m, 67f, 67m' on the track modules 60 can be selectively combined to interconnect adjoining track modules 60 in the assembled support track 12. In addition, various locking or retaining structures, components, and mechanisms can be used to retain the adjoining track modules 60 in position in the assembled support track 12, as will be discussed in further details below.

In the assembled support track 12, the adjoining track modules 60 are joined in an end-to-end fashion. For example, the corresponding support sections 66 of the track modules 60 are joined to form the respective elongated supporting surfaces 44 of the assembled support tracks 12. In one example, the assembled support track 12 can contain two parallel elongated supporting surfaces 44. Additionally or alternatively, the corresponding channel sections 70 of the adjoining track modules 60 are communicated with one another to form the respective elongated channels 50 of the support track 12. The elongated channels 50 of the support track 12 face toward each other for receiving part of the rolling unit 18 in the mowing device 10.

As Fig. 5f shows, multiple assembled support tracks 12 can be arranged and interconnected to form a track pattern 12' to cover part of the area or substantially the entire area (e.g., a building rooftop 2) to be serviced. Fig. 5f shows an embodiment of such a track pattern 12' formed by the assembled support tracks 12 and track modules 60. For example, seven support tracks 12 are used in the track pattern 12' and arranged parallel to one another in a side-by-side fashion. In one example, adjacent support tracks 12 are arranged to contact each other. A curved support track 12c can be employed to join the adjacent opening ends of the adjoining support tracks 12 so as to form a track pattern 12' with a single continuous track. For example, the track pattern 12' can have a serpentine shape, as is shown in Fig. 5f. As one skilled in the art will appreciate, different numbers and shapes of support tracks 12, 12c can be used to form track patterns 12' of different configurations.

In the example shown in Fig. 5f, the curved support track 12c can comprise one or more semicircular shaped track modules 60c for enclosing adjacent open ends 12e of the support tracks 12 and connecting the multiple assembled support tracks 12 into a track pattern 12' of a single continuous track. The one or more semicircular shaped track modules 60c are so arranged that the single continuous track in the track pattern 12' has at least one open end 12e, through which the mowing device 10 can be assembled with or removed from the support tracks 12 in the track pattern 12'. For example, the rolling unit 18 of the mowing device 10 can enter the elongated channels 50 in the support track 12 from such open end 12e of the track pattern 12'. In the example of Fig. 4, the open end 12e of the track pattern 12' is formed at at least one of the origination location 6 and the end location 8 of the track pattern 12'.

The semicircular shaped track module 60c in the track pattern 12' can be similarly formed with complimentary structures 67m, 67f for interconnecting with adjoining track modules 60 in the assembled support tracks 12. For example, complimentary thinned transverse edges 67m, 67f can be formed at the straight edges on the base section 62 of the semicircular shaped track module 60c. When the semicircular shaped track module 60c is connected to the ends of the adjacent support tracks 12, the straight edges on the base section 62c of the semicircular shaped track module 60c interconnect with the corresponding complimentary structures 67f, 67m on the base sections 62 of the adjacent support tracks 12. The sidewall section 64c of the semicircular shaped track module 60c join with the sidewall sections 64 of the adjacent track modules 60.

In the track pattern 12` shown in Fig. 5f, various fastening members 74 can be used to secure the adjacent support tracks 12 in position. In an example best shown in Fig. 5g, one or more U-shaped fastening clamps 74u can be used to achieve such purpose. When being used, the U-shaped fastening clamps 74u are oriented so that the two prongs are pointing down. For example, the two prongs of the U-shaped fastening clamp 74u can be inserted into corresponding pre-formed apertures in the respective top retaining portions 48 of the adjacent support tracks 12, as is shown on the right side of Fig. 5g. The U-shaped fastening clamp 74u can be pressed toward the support tracks 12 until the two prongs of the U-shaped fastening clamp 74u are inserted into corresponding pre-formed apertures in the respective elongated supporting surfaces 44 of the adjacent support tracks 12, as is shown on the left side of Fig. 5g. When the U-shaped fastening clamp 74u is in the fastening position of Fig. 5g, the adjacent support tracks 12 are secured to each other and maintained in position in the track pattern 12'. Various other types of fastening members 74 can be used to mount the adjacent support tracks 12 to each other or secure the support tracks 12 in position in the track pattern 12'. Additional accessory structures, components, and mechanisms can be incorporated in the assembled support tracks 12. For example, one or more mounting members 75 can be provided and mounted to the support tracks 12 for holding an irrigation water pipe used to water the grass in the area to be serviced. In the example shown in Fig. 5g, a cup shaped mounting member 75 can be fixed to the above described U-shaped fastening member 74u. The opening of each cup shaped mounting member 75 is adapted to receive and retain a portion of an irrigation water pipe. When a plurality of such cup shaped mounting members 75 are used, the irrigation water pipe can be held over the joined top retaining portions 50 of the adjacent support tracks 12. In one example, the cup shaped mounting member 75 can be integrally formed with the U-shaped fastening clamp 74u, thereby reducing the number of components used to assemble the track pattern 12'.

The track pattern 12` can be formed to cover the area to be serviced. In the example shown in Fig. 5f, the track pattern 12` can have a serpentine shape. In another example shown in Fig. 4, the track pattern 12' can serpentine from one side of the building rooftop 2 toward an opposite side of the building rooftop 2 and circle around any ventilation duct on the building rooftop 2. The serpentine track pattern 12' can change direction in which the track pattern 12` progresses. Other shapes of the track pattern 12' can also be employed to cover the area to be serviced.

The assembled support tracks 12 and the semicircular shaped track modules 60c in the track pattern 12` can be configured in various forms to be mounted to a fixture, such as a building rooftop 2. In one example, one or more waterproof layers can be used together with the track pattern 12', as is understood by one skilled in the art, to prevent excess water from leak through the building rooftop 2 and into the interior of the building.

After the track pattern 12' is mounted on the fixture, grass and earth can be arranged on the base portions 62 of the track modules 60, 60c. The thickness of the grass and earth in each of the track modules 60, 60c is determined so that the support surface 44 of the support track 12 and the support sections 66 of the track modules 60c are clear of any grass or earth. For example, the top surface of the grass and earth is arranged to be below the support surface 44 of the support track 12 and the support sections 66 of the track modules 60c.

During the mowing operation, the mowing device 10 moves in a mowing direction as guided by the support track 12 in the track pattern 12'. For example, the driving wheels 22 on the rolling unit 18 of the mowing device 10 are retained in the respective elongated channels 50 of the one or more support tracks 12. When the driving wheels 22 of the rolling unit 18 are rotated, such as by the power supply 14, the mowing device 10 travels along the support track 12 in the track pattern 12'.

Fig. 5h is a partial enlarged view of the track pattern 12' in Fig. 5f showing the movement of the mowing device 10 in turning portion of the track pattern 12'. As Fig. 5h shows, the mowing device 10 moves from one assembled support track 12 to the adjacent assembled support track 12 passing through the semicircular shaped track module 60c, which adjoins the adjacent ends of such adjacent assembled support tracks 12. The mowing device 10 in this example is similar to that shown in Fig. 2f. For example, the rolling unit 18 of the mowing device 10 including track assemblies 32 formed on the lateral end portions of the mowing device 10. Such track assemblies 32 of the rolling unit 18 can be supported in the respective elongated channels 50 in the support track 12 when the mowing device 90 moves along the support track 12 in a mowing direction. In one example, the track assemblies 32 of the rolling unit 18 are biased toward the respective lateral retaining portions 46 of the support track 12 when the track assemblies 32 are driven during a normal mowing operation.

When the mowing device 10 enters into the semicircular shaped track module 60c from an adjacent upstream support track 12, one of the track assemblies 34 (see the top track assembly 34t in Fig. 5h) of the mowing device 10 continues to travel along an elongated curved channel section 70c in the semicircular shaped track module 60c. The other of the track assemblies 34 (see the bottom track assembly 34b in Fig. 5h) of the mowing device 10 is pressed against and turns around the adjoining ends formed by the lateral retaining portions 46 of the adjacent support tracks 12. After the mowing device 10 completes the turn and moves from the semicircular shaped track module 60c into the adjacent downstream support track 12, the track assemblies 34 of the mowing device 10 can continue to travel along the respective parallel elongated channels 50 in the adjacent downstream support track 12.

The above turning operation is repeated when the mowing device 10 comes to the next turning portion of the track pattern 12'. In the examples shown in Fig. 5f, the turning operation of the two track assemblies 34 is reversed at the next turning portion of the track pattern 12', as is understood by one skilled in the art

Figs. 5i through 5l show another example of the mowing apparatus 1 comprising a mowing device 10 operating on parallel support tracks 12 formed by the track modules 60. in this example, the track module 60 is similar to that described above except that the channel wall 71 is a curved C shape, thereby defining a channel section 70 having a substantially circular or oval shaped cross section. The mowing device 10 shown in Fig. 5j is similar to the mowing device 10 shown in Fig. 2e and is adapted to be supported by the track module 60. For example, the guide wheels 30 in the rolling unit 18 of the mowing device 10 are received and supported in the channel sections 70, as is shown in Fig. 5k. When the track modules 60 are assembled to one another to form a support track 12, the various channel sections 70 communicate with one another to form respective elongated channels 50 of the support track 12. Additionally or alternatively, one or more driving wheels 22 in the rolling unit 18 of the mowing device 10 are directly supported on the area surface, such as a building rooftop 2 or lawn surface, as is shown in Fig. 5k.

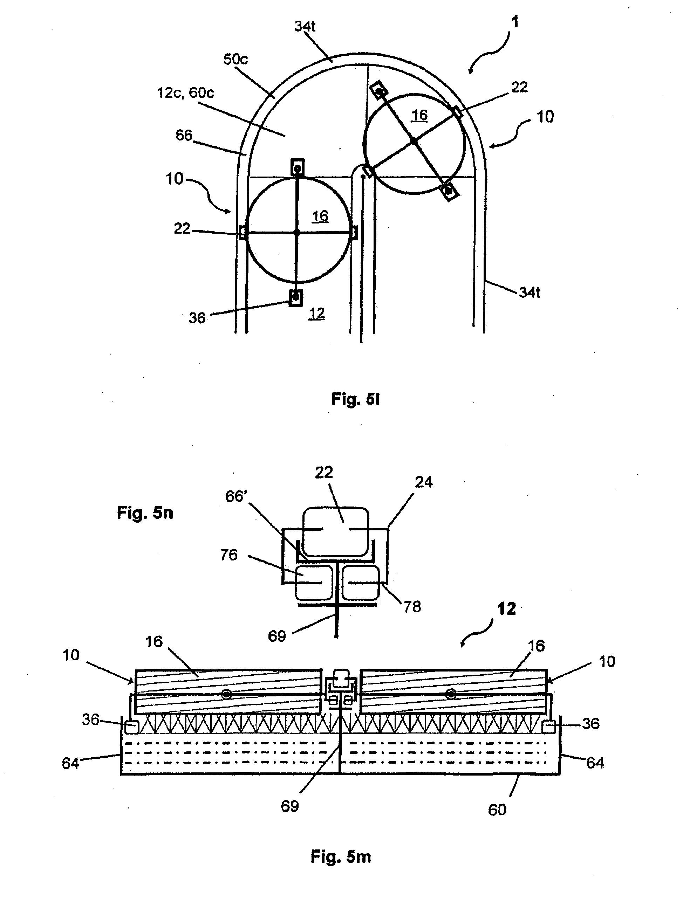

During a normal mowing operation, the driving wheels 22 in the rolling unit 18 are rotated (e.g., by the power supply 14) to drive the mowing unit 16 to move in a mowing direction. As Fig. 5k shows, the driving wheels 22 of the rolling unit 18 are aligned in a longitudinal direction of the support track 12. The guide wheels 30 of the rolling unit 18 are driven along the elongated channels 50 to guide the mowing device 10 along the support track 12. Fig. 5l is a partial enlarged view of the track pattern 12', on which a mowing device 10 is making turns. In one example, the driving wheels 22 can drive the mowing unit 16 to take the desired turns.

Figs. 5m and 5n show another example of the above described track module 60. In this example, the support section 66' of the track module 60' is formed to extend in a longitudinal direction between the sidewall sections 64 of the track module 60'. In one example, the support section 66' of the track module 60' is located between the two sidewall sections 64 at a center portion in the transverse direction of the track module 60'. In this example, the sidewall sections 64 of the track module 60' can be free of a support section 66 and a retaining portion 68. In another example, the support section 66' is elevated from the base section 62 of the track module 60' by a support wall 69 supported on the base section 62. In the examples shown in Figs. 5m and 5n, the support section 66' and the support wall 69 are joined to each other forming a T-shape in the transverse cross section of the track module 60'. In an assembled support track 12 formed by the track modules 60', the support sections 66' of the track modules 60' are arranged to form the elongated supporting surface 44 of the assembled support track 12.

The track modules 60' shown in Figs. 5m and 5n can be similarly formed with various structures, components, and mechanisms to support and retain the final configuration of the track module 60' and/or to interconnect adjoining track modules 60' in the assembled support track 12.

During a normal operation of the mowing apparatus 1 including a support track 12 formed by the track modules 60', the mowing unit 16 is movably supported on such support track 12. As is shown in Figs. 5m and 5n, one mowing device 10 is arranged on each side of the longitudinal support wall 69 of the track module 60'. In one example, these mowing devices 10 can have one or more common driving wheels 22 supported on the support section 66' of the track modules 60', which support section 66' of the track modules 60' forms the elongated supporting surface 44 of the support track 12. For example, the driving wheels 22 of the respective rolling units 18 can be fixedly mounted on a driving shaft 24, which is driven by the power supply 14 to rotate the driving wheels 22 and carry the mowing device 10 to move along the elongated supporting surface 44 of the support track 12.

Additionally or alternatively, the mowing devices 10 each can have an additional wheel 76 configured to support or retain the respective mowing unit 16 on the support track 12 during the normal mowing operation. As is best shown in Fig. 5n, the additional wheels 76 in the rolling units 18 can be positioned under the support section 66' of the track modules 60' and on the opposite sides of the support wall 69. In one example, the additional wheels 76 can be formed as driving wheels in addition to or in place of the one or more common driving wheels 22. For example, the additional wheels 76 can be fixedly mounted on their respective shafts 78, which can be driven by the power supply 14 to rotate the additional wheels 76 in a longitudinal direction of the support track 12 and along an undersurface opposite from the elongated supporting surface 44. In such a case, the common driving wheels 22 can be passively driven by the additional wheels 76. For example, the common driving wheels 22 can be rotatably supported on their driving shaft 24.

In an alternative example, the additional wheels 76 can be rotatably supported on respective shafts 78 of the mowing devices 10 to support the mowing unit 16. During a normal mowing operation, such additional wheel 76 can be biased against the undersurface of the support sections 66', thereby retaining the mowing device 10 on the support track 12 of the mowing apparatus 1 and prevent the mowing device 10 from being separated from the support track 12. In another example, the additional wheels 76 can be offset from the one or more common driving wheels 22 in a longitudinal direction of the support track 12 to balance or otherwise support the mowing units 16. In a further example, the additional wheels 76 can operate to guide the mowing units 16 to move along a mowing direction. The additional wheels 76 of the mowing devices 10 can be in various other forms and/or achieve the same or additional functions.

As Fig. 5m shows, the mowing devices 10 can include one or more supporting wheels 36 to support the mowing units 16 on the base portion 62. For example, such supporting wheels 36 can be rotatably attached to the bottom of the mowing units 16 to thereby provide support thereto. In the example, one of such supporting wheels 36 can be rotatably attached to the underside of the mowing unit 16 at a laterally outward location, as is shown in Fig. 5m. The supporting wheels 36 can support the respective mowing units 16 to move along the elongated supporting surfaces 44 of the support track 12 during a normal mowing operation.

### 5. Storage Station

The mowing apparatus 1 can further comprise a storage station 80, as shown in Fig. 5f, where the mowing device 10 can be stored or maintained. In the example shown in Fig. 5f, the storage station 80 has an enclosed housing 82 configured to accommodate and contain the mowing device 10, when the mowing device 10 is not in operation. The housing 82 of the storage station 80 has an access allowing the mowing device 10 to enter or exit the housing 82. Such access can be covered and/or locked after the mowing device 10 is stored inside the housing 82 to protect the mowing device 10 from adverse weather conditions or unauthorized access. The housing 82 of the storage station 80 can be formed in various shapes and/or with designs to enhance the aesthetic appeal of the storage station 80. For example, the housing 82 can be formed in the shape of an animal, a flower, a cartoon character, or other aesthetic designs.

The storage station 80 can be positioned at various locations in the area to be maintained. For example, the housing 82 of the storage station 80 can be mounted at either the origination location 6 or the end location 8 of the support tracks 12, as is shown in Fig. 4. In one example, the housing 82 of the storage 80 is positioned to enclose one end portion of the elongated support track 12 including the elongated channel 50. In such a case, the housing 82 of the storage station 80 can protect the mowing device 10 from unauthorized removal from the elongated channel 50 of the support tracks 12 when the mowing device 10 is locked inside such housing 82. When the housing 82 of the storage station 80 is open, the mowing device 10 to be removed from the open end portion of the elongated channel 50 of the support track 12. For example, the user can move the mowing device 10 from the support track 12 to a convenient location, such as a garage, to clean, repair, and/or maintain the mowing device 10. After maintenance, the mowing device 10 can be reassembled with the support track 12 for further mowing operation. For example, the mowing device 10 placed inside the housing 82 of the storage station 80 to allow the driving wheels 22, balancing wheels 26, or guide wheels 30 to enter into the elongated channel 50 through its open end portion. Additionally or alternatively, a different operation device, such as a fertilizing device 112, a rolling device 114_{;} a sweeping device 116, and/or other operation devices, can be assembled with the support track 12 for a different type of grass maintenance operation, as is further discussed below. After the mowing device 10 is mounted on the support track 12, the housing 82 of the storage station 80 can be closed and locked to safely keep the mowing device 10 inside the housing 82.

In a preferred embodiment, the mowing apparatus 1 is formed so that the mowing device 10 can be removed and separated from the support track 12 only at the storage station 80. When the housing 82 of the storage station 80 is sealed or locked with the mowing device 10 inside the housing 82, the mowing device 10 is secured from unauthorized or unintended removal from the mowing apparatus 1.

The storage station 80 of the mowing apparatus 1 can be equipped with various supplies for maintaining the mowing apparatus 1. In one example, a power outlet can be formed inside the housing 82 of the storage station 80 to supply power to the mowing device 10 through a power cable. For example, the storage station 80 can be equipped with a standard power outlet for charging batteries used in the mowing device 10 to power the same during a normal mowing operation. Various other maintenance equipment or tools can also be stored in the housing 82 of the storage station 80 for the user's convenience.

### 6. Alternative Embodiment of the Mowing Apparatus

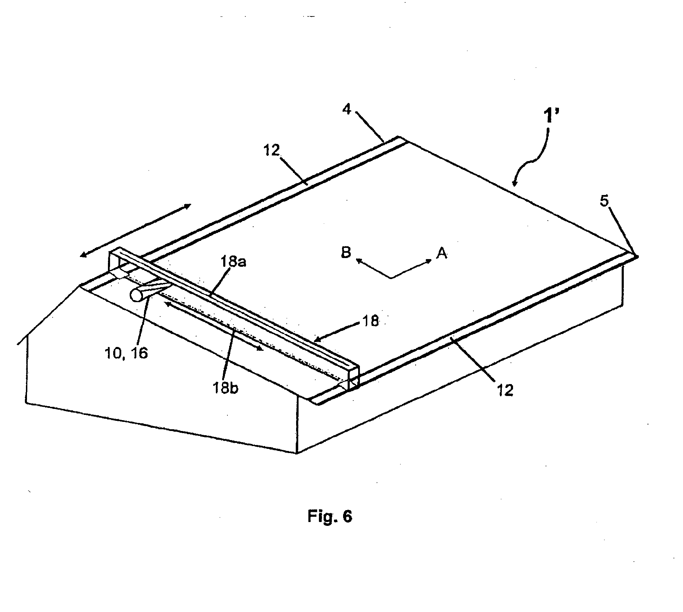

Fig. 6 shows another embodiment of the mowing apparatus 1'. The mowing apparatus 1' can comprise a mowing device 10 movably supported on a pair of parallel support tracks 12 mounted to a fixture, such as a building rooftop 2 as is discussed in the above embodiment. For example, the support tracks 12 can be mounted along the roof ridge 4 and a roof gutter 5 of the building rooftop 2, respectively, and extend in a first direction A parallel to the roof ridge 4 and the roof gutter 5. As one skilled in the art will appreciate, the support tracks 12 can be mounted on other fixtures, such as lawns.

The mowing device 10 of the mowing apparatus 1' can comprise a mowing unit 16 movably supported on the support tracks 12 through a rolling unit 18. The rolling unit 18 of the mowing device 10 can comprise a longitudinal moving portion 18a movably supported on the pair of parallel support tracks 12. In the example shown in Fig. 6, the longitudinal moving portion 18a can expand transversely between the pair of support tracks 12 and be movably supported thereon. For example, the longitudinal moving portion 18a can comprise one or more driving wheels, which are rotated by a power supply 14 to travel along the support tracks 12. In one example described in great details below, the longitudinal moving portion 18a are driven to move intermittently, such as by a step motor. Various other driving means can be employed to drive the longitudinal moving portion 18a to move along the support tracks 12.

Additionally or alternatively, the rolling unit 18 in the mowing device 10 of the mowing apparatus I' can comprise a transverse moving portion 18b movably supported by the longitudinal moving portion 18a. For example, the transverse moving portion 18b supports the mowing unit 16 to move transversely between the support tracks 12 in a second direction B during a normal mowing operation. In the example of Fig. 6, the second direction B is orientated to be transverse to the first direction A.

The transverse moving portion 18b of the rolling unit 18 can be in various forms to support the mowing unit 16 of the mowing device 10. In one example, the transverse moving portion 18b can be in the form of a movable cable, such as those used in a gondola life to transport a cable car. In another example, the transverse moving portion 18b can be formed to contain driving wheels rotatably supported on a supporting track structure formed on the longitudinal moving portion 18a of the rolling unit 18. For example, the driving wheel of the transverse moving portion 18b and the supporting track structure of the longitudinal moving portion 18a can be formed similarly to the driving wheels 22 and the support tracks 12 described above, allowing the transverse moving portion 18b to move along a supporting track structure formed in the longitudinal moving portion 18a. Various other transporting mechanisms can be employed to configure the transverse moving portion 18b of the rolling unit 18 to carry out the movement of the mowing unit 16_{:}

During the operation of the mowing apparatus 1', the longitudinal and transverse moving portions 18a, 18b of the rolling unit 18 move in respective longitudinal and transverse directions allowing the mowing unit 16 to carry out the mowing operation to an area between the parallel support tracks 12. For example, the transverse moving portion 18b of the rolling unit 18 carries the mowing unit 16 to move from one support track 12 to the opposite support track 12 to perform the mowing operation in a transverse direction. In one example, the mowing unit 16 is carried by the transverse moving portion 18b to move in the second direction 8. The longitudinal moving portion 18a of the rolling unit 18 can remain stationary while the mowing unit 16 moves from one support track 12 to the opposite support track 12 to carry out the mowing operation in or opposite the second direction B.

When the mowing unit 16 reaches the opposite support track 12, the longitudinal moving portion 18a moves in a longitudinal direction and toward the grass area to be mowed. For example, the longitudinal moving portion 18a of the rolling unit 18 is subject to an intermittent movement in the longitudinal direction. In the example shown in Fig. 6, the longitudinal moving portion 18a moves in the first direction A after the mowing unit 16 completes the mowing operation in a transverse direction. The mowing unit 16 can then carry out the mowing operation in the grass area adjoining the area that is just mowed. For example, the mowing unit 16 is carried by the transverse moving portion 18b to move in a direction opposite form the second direction B.

The above mowing operation is repeated until the entire area between the support tracks 12 is serviced.

### 7. Grass Maintenance System

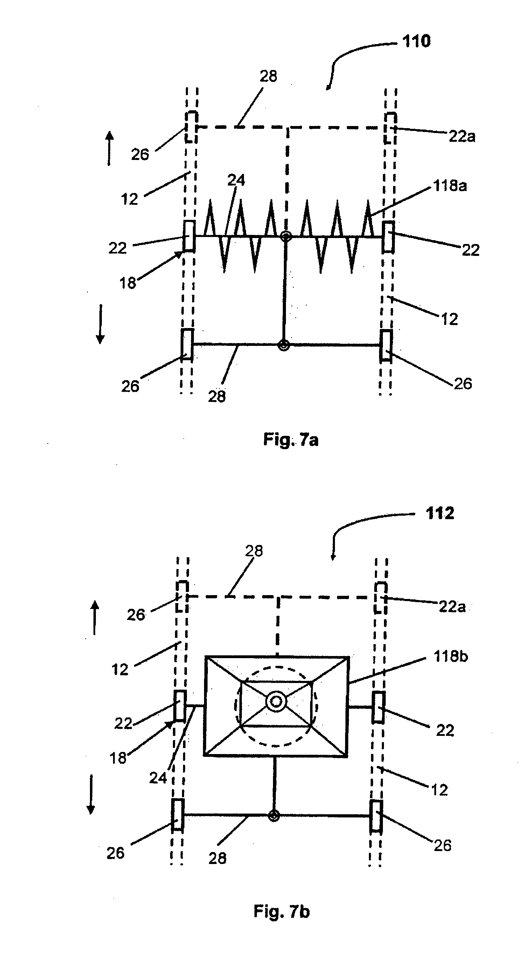

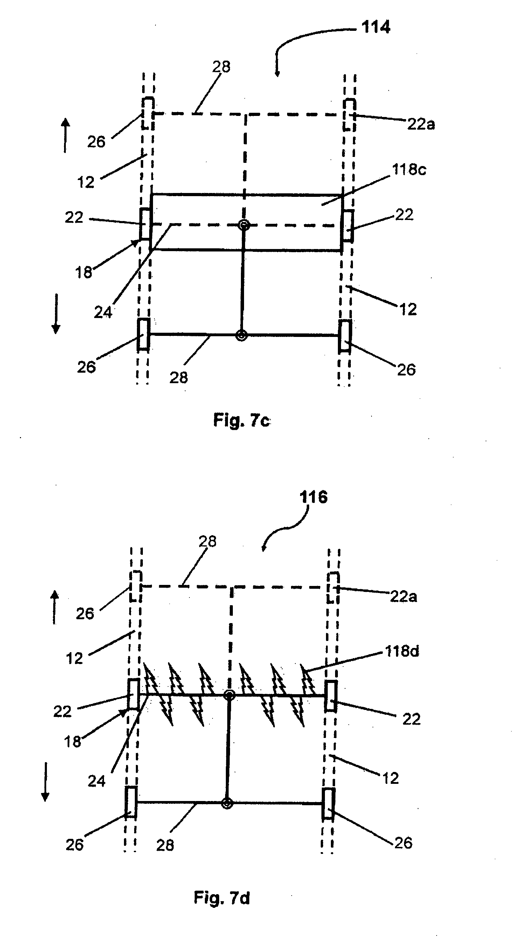

Although the various embodiments herein are described in connection with a mowing apparatus 1 including a mowing device 10, the invention is not limited to such a mowing apparatus 1. In one embodiment, various grass maintenance devices are formed to be interchangeable with a mowing device 10 described above. For example, an aerating device 110, a fertilizing device 112, a rolling device 114, a sweeping device 116, and/or other operation device can be formed each containing an operation unit 118a - 118d configured for a predetermined grass maintenance operation, as is understood by one skilled in the art. In the example shown in Fig. 7a, the operation unit 118 of the aerating device 110 is in the form of an aerator unit 118a. The configuration and operation of such aerator unit 118a are understood by one skilled in the art.

The aerating device 110, fertilizing device 112, rolling device 114, sweeping device 116, and/or other operation device can be formed to have a rolling unit 18 as described above. Accordingly, such aerating device 110, fertilizing device 112, rolling device 114, sweeping device 116, and other operation devices can be supported on the support track 12 when carrying out the intended grass maintenance operation, Additionally or alternatively, the aerating device 110, the fertilizing device 112, the rolling device 114, the sweeping device 116, and/or other operation devices are interchangeable and can be used together with the above discussed support track 12 to carry out the intended grass maintenance.

In addition, the aerating device 110, the fertilizing device 112, the rolling device 114, the sweeping device 116, and/or other operation devices can be formed with various electronic control circuits and components to facilitate automation of the grass maintenance operation. For example, electronic control circuit can be provided for remote control of the operation direction, speed, and/or frequency of one or more of the operation devices.

The combination of the mowing device 10, the support tracks, 12, the aerating device 110, the fertilizing device 112, the rolling device 114, the sweeping device 116, and other operation devices can constitute a grass maintenance system. Depending on the grass maintenance need, the user can choose to use one of the operation devices 10, 11, 112, 114, 116 describe above and/or other operating devices (such as pruning device, a weeding device, a dead-heading device, etc.). The user can then assemble the chosen operation device on the support track 12 in a similar manner described above in relation to the mowing device 10.

The chosen operation device can be operated through the power supply 14 to move along the support track 12 and/or to carry out the predetermined grass maintenance operation. In a preferred embodiment, the various grass maintenance operations can be remotely controlled by a user. After the operation is completed, the chosen operation device can be housed in the storage station 80 or replaced by another operation device for additional grass maintenance operation. Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A mowing apparatus (11 comprising:
a pair of support tracks (12) arranged to be parallel to each other and adapted to be mounted to an area to be maintained; and
a mowing device (10) adapted to be supported on the pair of support tracks, the mowing device (10) comprising a power supply (14) for moving the mowing device along the pair of support tracks and for operating the mowing device to carry out a mowing operation;
**characterized in that** the pair of support tracks are each configured to guide the mowing device to move along the support tracks during a normal moving operation and to comprise an elongated channel having a C-shaped cross section and opening toward the other one of the pair of
support tracks to thereby retain the moving device on the support tracks, and
the mowing device is partially received in the elongated channels, so that the mowing device is movable along the elongated channels in the pair of support tracks but is inseparable therefrom in a lateral direction of the support tracks.

2. The mowing apparatus (1) according to claim 1,
wherein the mowing device (10) comprises a mowing unit (16) and a rolling unit (18) rotatably supported by the mowing unit; and
wherein the rolling unit of the mowing device is adapted to be driven by the power supply and drives the mowing unit along the longitudinal channels in the pair of support tracks.

3. The mowing apparatus (1) according to claim 2, wherein the rolling unit (18) of the mowing device (10) comprises a driving unit rotatably supported on the pair of support tracks and retained in the longitudinal channels.

4. The mowing apparatus (1) according to claim 2, wherein the rolling unit (18) of the mowing device (10) comprises a driving unit supported on the area to be maintained and a guiding unit rotatably supported on the pair of support tracks and retained in the longitudinal channels.

5. The mowing apparatus (1) according to claim 2,
wherein the rolling unit (18) of the mowing device (10) comprises a longitudinal moving portion movably supported on the pair of support tracks and a transverse moving portion movably supported by the longitudinal moving portion of the rolling unit (18), and
wherein the transverse moving portion supports the mowing unit to move along the longitudinal moving portion of the rolling unit (18).

6. The mowing apparatus (1) according to claim 3, wherein the rolling unit (18) of the mowing device (10) further comprises a guiding unit rotatably supported on the pair of support tracks and retained in the longitudinal channels.

7. The mowing apparatus (1) according to claim 1, wherein the pair of support tracks (12) extend in a serpentine pattern to allow the mowing device to maintain an area to be maintained.

8. The mowing apparatus (1) according to claim 1,
wherein the pair of support tracks comprises a plurality of adjacent track sections arranged parallel to each other, so that the mowing device (10) can maintain an area extend in a direction perpendicular to a longitudinal direction of the pair of support tracks.

9. The mowing apparatus (1) according to any preceding claim,
wherein the pair of support tracks comprise a plurality of first track modules, each of the first track modules comprising a base portion (62), sidewall sections (64) connected with the base portion, and a support section (66) formed on each of the sidewall sections; and
wherein the support sections of the respective sidewall sections of the plurality of first track modules are capable of joining with the respective support sections of another one of the plurality of first track modules to form at least part of a supporting surface of the pair of support tracks.

10. The mowing apparatus (1) according to claim 9,
wherein the pair of support tracks comprise one or more second track modules, the one or more second track modules comprising a base portion (62), a sidewall section (64) connected with the base portion of the one or more second track modules, and a support section (66) formed on the sidewall section of the one or more second track modules; and
wherein the support section of the one or more second track modules is capable of joining with one of the support sections of at least one of the plurality of first track modules to form at least part of the supporting surface of the support track.

11. The mowing apparatus (1) according to claim 10, wherein the plurality of first track modules form a linear portion of the support track, and wherein the one or more second track modules form a curved portion of the support track.

12. The mowing apparatus (1) according to claim 11,
wherein further comprising complementary interlocking structures for connecting with a similarly formed track module.

13. A grass maintenance system comprising:
a pair of support tracks (12) arranged to be parrallel to each other and adapted to be mounted to an area to be maintained; and
one or more grass maintenance devices (110, 112, 114, 116) adapted to be supported on the pair of support tracks, the one or more grass maintenance devices comprising a power supply (14) for moving the one or more grass maintenance devices along the pair of support tracks and for operating the one or more grass maintenance devices to carry out a grass maintenance operation;
**characterized in that** the pair of support tracks are each configured to guide one of the one or more grass maintenance devices to move along the support tracks during a normal moving operation and to comprise an elongaded channel having a C-shaped cross section and opening toward the other one of the pair of
support tracks to thereby retain one of so one or more grass maintenance devices on the support tracks and
one of the one or more grass maintenance devices is partially received in the elongated
channels, so that the one of the one or more grass maintenance devices is movable along the elongated channels in the pair of support tracks but is inseparable therefrom in a lateral direction of the support tracks.

14. The grass maintenance system according to claim 13, wherein the one or more grass maintenance devices each comprise a grass maintenance unit and a driving unit rotatably supported by the grass maintenance unit and driving the grass maintenance unit along the pair of support tracks.

15. The grass maintenance system according to claim 13,
wherein the one or more grass maintenance devices comprise a plurality of grass maintenance devices, and
wherein the plurality of grass maintenance devices have different grass maintenance units and a same driving unit,
whereby the plurality of grass maintenance devices can be used interchangeably with the pair of support tracks.

## Patentansprüche

1. Mähapparat (1), umfassend:
ein Paar Stützspuren (12), die so angeordnet sind,
dass sie parallel zueinander verlaufen, und geeignet sind, an einem zu pflegenden Bereich montiert zu werden, und
eine Mähvorrichtung (10), die geeignet ist, auf dem Paar Stützspuren gestützt zu werden, wobei die Mähvorrichtung (10) eine Energieversorgung (14) zum Bewegen der Mähvorrichtung entlang dem Paar Stützspuren und zum Betreiben der Mähvorrichtung,
um einen Mähvorgang durchzuführen, umfasst,
**dadurch gekennzeichnet, dass** das Paar Stützspuren jeweils dazu konfiguriert ist, die Mähvorrichtung so zu führen, dass sie sich während eines normalen Mähvorgangs entlang den Stützspuren bewegt, und
einen Längskanal mit einem C-förmigen Querschnitt zu umfassen, der zu der anderen des Paars Stützspuren hin mündet, um dadurch die Mähvorrichtung auf den Stützspuren zu halten, und
die Mähvorrichtung teilweise in den Längskanälen aufgenommen ist, so dass die Mähvorrichtung entlang den Längskanälen in dem Paar Stützspuren beweglich ist, aber in einer seitlichen Richtung der Stützspuren nicht davon getrennt werden kann.

2. Mähvorrichtung (1) nach Anspruch 1,
wobei die Mähvorrichtung (10) eine Mäheinheit (16) und eine drehbar von der Mäheinheit gestützte Rolleinheit (18) umfasst und
wobei die Rolleinheit der Mähvorrichtung geeignet ist, durch die Energieversorgung angetrieben zu werden, und die Mäheinheit entlang den Längskanälen in dem Paar Stützspuren treibt.

3. Mähvorrichtung (1) nach Anspruch 2, wobei die Rolleinheit (18) der Mähvorrichtung (10) eine Antriebseinheit umfasst, die drehbar auf dem Paar Stützspuren gestützt und in den Längskanälen gehalten ist.

4. Mähvorrichtung (1) nach Anspruch 2, wobei die Rolleinheit (18) der Mähvorrichtung (10) eine Antriebseinheit, die auf dem zu pflegenden Bereich gestützt ist, und eine Führungseinheit, die drehbar auf dem Paar Stützspuren gestützt und in den Längskanälen gehalten ist, umfasst.

5. Mähvorrichtung (1) nach Anspruch 2,
wobei die Rolleinheit (18) der Mähvorrichtung (10) einen Längsbewegungsabschnitt, der beweglich auf dem Paar Stützspuren gestützt ist, und einen Querbewegungsabschnitt, der beweglich durch den Längsbewegungsabschnitt der Rolleinhiet (18) gestützt ist, umfasst und
wobei der Querbewegungsabschnitt die Mäheinheit stützt, so dass sie sich entlang dem Längsbewegungsabschnitt der Rolleinheit (18) bewegt.

6. Mähvorrichtung (1) nach Anspruch 3, wobei die Rolleinheit (18) der Mähvorrichtung (10) ferner eine Führungseinheit umfasst, die drehbar auf dem Paar Stützspuren gestützt und in den Längskanälen gehalten ist.

7. Mähvorrichtung (1) nach Anspruch 1, wobei sich das Paar Stützspuren (12) in einem serpentinenförmigen Muster erstreckt, damit die Mähvorrichtung einen zu pflegenden Bereich pflegen kann.

8. Mähvorrichtung (1) nach Anspruch 1,
wobei das Paar Stützspuren eine Vielzahl von benachbarten Spurenabschnitten umfasst, die parallel zueinander angeordnet sind, so dass die Mähvorrichtung (10) einen Bereich pflegen kann, sich in einer senkrecht zu einer Längsrichtung des Paars Stützspuren verlaufenden Richtung erstrecken.

9. Mähvorrichtung (1) nach einem der vorhergehenden Ansprüche,
wobei das Paar Stützspuren eine Vielzahl von ersten Spurmodulen umfasst, wobei jedes der ersten Spurmodule einen Basisabschnitt (62), mit dem Basisabschnitt verbundene Seitenwandabschnitte (64) und einen an jedem der Seitenwandabschnitte gebildeten Stützabschnitt (66) umfasst, und
wobei die Stützabschnitte der jeweiligen Seitenwandabschnitte der Vielzahl von ersten Spurmodulen mit den jeweiligen Stützabschnitten eines anderen der Vielzahl von ersten Spurmodulen verbunden werden können, um mindestens einen Teil einer Stützfläche des Paars Stützspuren zu bilden.

10. Mähvorrichtung (1) nach Anspruch 9,
wobei das Paar Stützspuren ein oder mehrere zweite Spurmodule umfasst, wobei das eine oder die mehreren zweiten Spurmodule einen Basisabschnitt (62), einen mit dem Basisabschnitt des einen oder der mehreren zweiten Spurmodule verbundenen Seitenwandabschnitt (64) und einen an dem Seitenwandabschnitt des einen oder der mehreren zweiten Spurmodule gebildeten Stützabschnitt (66) umfassen, und
wobei die Stützabschnitte des einen oder der mehreren zweiten Spurmodule mit einem der Stützabschnitte mindestens eines der Vielzahl von ersten Spurmodulen verbunden werden können, um mindestens einen Teil der Stützfläche der Stützspur zu bilden.

11. Mähvorrichtung (1) nach Anspruch 10,
wobei die Vielzahl von ersten Spurmodulen einen linearen Abschnitt der Stützspur bildet und wobei das eine oder die mehreren zweiten Spurmodule einen gekrümmten Abschnitt der Stützspur bilden.

12. Mähvorrichtung (1) nach Anspruch 11,
wobei ferner umfassend komplementäre ineinandergreifende Strukturen zur Verbindung mit einem ähnlich gebildeten Spurmodul.

13. Graspflegesystem, umfassend:
ein Paar Stützspuren (12), die so angeordnet sind,
dass sie parallel zueinander verlaufen, und geeignet sind, an einem zu pflegenden Bereich montiert zu werden, und
eine oder mehrere Graspflegevorrichtungen (110, 112, 114, 116), die geeignet sind, auf dem Paar Stützspuren gestützt zu werden, wobei die eine oder die mehreren Graspflegevorrichtungen eine Energieversorgung (14) umfassen, um die eine oder
die mehreren Graspflegevorrichtungen entlang dem Paar Stützspuren zu bewegen und um die eine oder
die mehreren Graspflegevorrichtungen zur Durchführung eines Graspflegevorgangs zu betätigen,
**dadurch gekennzeichnet, dass** das Paar Stützspuren jeweils dazu konfiguriert ist, eine der einen oder
der mehreren Graspflegevorrichtungen so zu führen,
dass sie sich während eines normalen Mähvorgangs entlang den Stützspuren bewegt, und einen Längskanal mit einem C-förmigen Querschnitt zu umfassen, der zu der anderen des Paars Stützspuren hin mündet, um dadurch eine der einen oder der mehreren Graspflegevorrichtungen auf den Stützspuren zu halten, und
eine der einen oder der mehreren Graspflegevorrichtungen teilweise in den Längskanälen aufgenommen ist, so dass die eine der einen oder der mehreren Graspflegevorrichtungen entlang den Längskanälen in dem Paar Stützspuren beweglich ist, aber in einer seitlichen Richtung der Stützspuren nicht davon getrennt werden kann.

14. Graspflegesystem nach Anspruch 13, wobei die eine oder die mehreren Graspflegevorrichtungen jeweils eine Graspflegeeinheit und eine Antriebseinheit umfassen, die drehbar von der Graspflegeeinheit gestützt ist und die Graspflegeeinheit entlang dem Paar Stützspuren treibt.

15. Graspflegesystem nach Anspruch 13,
wobei die eine oder die mehreren Graspflegevorrichtungen eine Vielzahl von Graspflegevorrichtungen umfassen und
wobei die Vielzahl von Graspflegevorrichtungen unterschiedliche Graspflegeeinheiten und dieselbe Antriebseinheit haben,
wodurch die Vielzahl von Graspflegevorrichtungen austauschbar mit dem Paar Stützspuren verwendet werden kann.

## Revendications

1. Tondeuse (1), comprenant:
une paire de pistes de support (12) agencées de manière à être parallèles l'une à l'autre et adaptées pour être montées sur une surface à entretenir; et
un dispositif de tonte (10) adapté pour être supporté sur la paire de pistes de support, le dispositif de tonte (10) comprenant une alimentation électrique (14) pour déplacer le dispositif de tonte le long de la paire de pistes de support et pour commander au dispositif de tonte d'exécuter une opération de tonte;
**caractérisée en ce que** la paire de piste de support sont chacune configurées pour guider le dispositif de tonte pour déplacer celui-ci le long des pistes de support pendant une opération de tonte normale et pour comprendre un canal allongé présentant une section transversale en forme de C et s'ouvrant en direction de l'autre de la paire de pistes de support afin de retenir de cette manière le dispositif de tonte sur les pistes de support, et
le dispositif de tonte est partiellement reçu dans les canaux allongés, de telle sorte que le dispositif de tonte soit mobile le long des canaux allongés dans la paire de pistes de support mais soit inséparable de ceux-ci dans une direction latérale des pistes de support.

2. Tondeuse (1) selon la revendication 1, dans laquelle le dispositif de tonte (10) comprend une unité de tonte (16) et une unité de roulement (18) qui est supportée de façon rotative par l'unité de tonte; et dans laquelle l'unité de roulement du dispositif de tonte est adaptée pour être entraînée par l'alimentation électrique et entraîne l'unité de tonte le long des canaux longitudinaux dans la paire de pistes de support.

3. Tondeuse (1) selon la revendication 2, dans laquelle l'unité de roulement (18) du dispositif de tonte (10) comprend une unité d'entraînement qui est supportée de façon rotative sur la paire de pistes de support et qui est retenue dans les canaux longitudinaux.

4. Tondeuse (1) selon la revendication 2, dans laquelle l'unité de roulement (18) du dispositif de tonte (10) comprend une unité d'entraînement qui est supportée sur la surface à entretenir et une unité de guidage qui est supportée de façon rotative sur la paire de pistes de support et qui est retenue dans les canaux longitudinaux.

5. Tondeuse (1) selon la revendication 2, dans laquelle l'unité de roulement (18) du dispositif de tonte (10) comprend une partie mobile longitudinale qui est supportée de façon mobile sur la paire de pistes de support et une partie mobile transversale qui est supportée de façon mobile par la partie mobile longitudinale de l'unité de roulement (18), et dans laquelle la partie mobile transversale supporte l'unité de tonte pour déplacer celle-ci le long de la partie mobile transversale de l'unité de roulement (18).

6. Tondeuse (1) selon la revendication 3, dans laquelle l'unité de roulement (18) du dispositif de tonte (10) comprend en outre une unité de guidage qui est supportée de façon rotative sur la paire de pistes de support et qui est retenue dans les canaux longitudinaux.

7. Tondeuse (1) selon la revendication 1, dans laquelle la paire de pistes de support (12) s'étend dans un motif en serpentin de manière à permettre au dispositif de tonte d'entretenir une surface à entretenir.

8. Tondeuse (1) selon la revendication 1, dans laquelle la paire de pistes de support comprend une pluralité de sections de piste adjacentes agencées parallèlement les unes aux autres, de telle sorte que le dispositif de tonte (10) puisse entretenir une surface s'étendent dans une direction perpendiculaire à la direction longitudinale de la paire de pistes de support.

9. Tondeuse (1) selon l'une quelconque des revendications précédentes, dans laquelle la paire de pistes de support comprend une pluralité de premiers modules de piste, chacun des premiers modules de piste comprenant une partie de base (62), des sections de paroi latérale (64) connectées à la partie de base, et une section de support (66) qui est formée sur chacune des sections de paroi latérale; et dans laquelle les sections de support des sections de paroi latérale respectives de la pluralité de premiers modules de piste sont capables de se joindre aux sections de support respectives d'un autre de la pluralité de premiers modules de piste de manière à former au moins une partie d'une surface de support de la paire de pistes de support.

10. Tondeuse (1) selon la revendication 9, dans laquelle la paire de pistes de support comprend un ou plusieurs deuxième(s) module(s) de piste, ledit/lesdits un ou plusieurs deuxième(s) module(s) de piste comprenant une partie de base (62), une section de paroi latérale (64) qui est connectée à la partie de base dudit/desdits un ou plusieurs deuxième(s) module (s) de piste, et une section de support (66) qui est formée sur la section de paroi latérale dudit/desdits un ou plusieurs deuxième(s) module(s) de piste; et dans laquelle la section de support dudit/desdits un ou plusieurs deuxième(s) module(s) de piste est capable de se joindre à l'une des sections de support d'au moins un de la pluralité de premiers modules de piste de manière à former au moins une partie de la surface de support de la piste de support.

11. Tondeuse (1) selon la revendication 10, dans laquelle la pluralité de premiers modules de piste forme une partie linéaire de la piste de support, et dans laquelle ledit/lesdits un ou plusieurs deuxième(s) module(s) de piste forme(nt) une partie courbe de la piste de support.

12. Tondeuse (1) selon la revendication 11, dans laquelle comprenant en outre des structures d'interverrouillage complémentaires à connecter à un module de piste formé de façon similaire.

13. Système d'entretien de gazon, comprenant:
une paire de pistes de support (12) agencées de manière à être parallèles l'une à l'autre et adaptées pour être montées sur une surface à entretenir; et
un ou plusieurs dispositif(s) d'entretien de gazon (110, 112, 114, 116) adapté(s) pour être supporté(s) sur la paire de pistes de support, ledit/lesdits un ou plusieurs dispositif(s) d'entretien de gazon comprenant une alimentation électrique (14) pour déplacer ledit/lesdits un ou plusieurs dispositif(s) d'entretien de gazon le long de la paire de pistes de support et pour commander audit/auxdits un ou plusieurs dispositif(s) d'entretien de gazon d'exécuter une opération d'entretien de gazon;
**caractérisé en ce que** la paire de pistes de support sont chacune configurées pour guider un dudit/desdits un ou plusieurs dispositif(s) d'entretien de gazon pour le déplacer le long des pistes de support pendant une opération de tonte normale et pour comprendre un canal allongé présentant une section transversale en forme de C et s'ouvrant en direction de l'autre de la paire de pistes de support afin de retenir de cette manière un dudit/desdits un ou plusieurs dispositif(s) d'entretien de gazon sur les piste de support, et
un dudit/desdits un ou plusieurs dispositif(s) d'entretien de gazon est partiellement reçu dans les canaux allongés, de telle sorte que ledit un dudit/desdits un ou plusieurs dispositif(s) d'entretien de gazon soit mobile le long des canaux allongés dans la paire de pistes de support mais soit inséparable de ceux-ci dans une direction latérale des pistes de support.

14. Système d'entretien de gazon selon la revendication 13, dans lequel ledit/lesdits un ou plusieurs dispositif(s) d'entretien de gazon comprend (comprennent) chacun une unité d'entretien de gazon et une unité d'entraînement qui est supportée de façon rotative par l'unité d'entretien de gazon et qui entraîne l'unité d'entretien de gazon le long de la paire de pistes de support.

15. Système d'entretien de gazon selon la revendication 13,
dans lequel ledit/lesdits un ou plusieurs dispositif(s) d'entretien de gazon comprend (comprennent) une pluralité de dispositifs d'entretien de gazon, et
dans lequel la pluralité de dispositifs d'entretien de gazon comprend différentes unités d'entretien de gazon et une même unité d'entraînement,
moyennant quoi la pluralité de dispositifs d'entretien de gazon peut être utilisée de façon interchangeable avec la paire de pistes de support.
